# EUROPEAN PATENT APPLICATION

(11) **EP 2 056 636 A1**
(43) Date of publication of application: **06.05.2009**
(21) Application number: 08167659.5
(22) Date of filing: 27.10.2008
(51) Int. Cl.: H04W 28/04

(54) **Method, apparatuses and software for detecting loss of encryption synchronisation between mobile station and wireless base station**

(30) Priority: 29.10.2007 JP 2007280119
(71) Applicant: Fujitsu Limited, Kawasaki-shi, Kanagawa 211-8588 (JP)
(72) Inventor: Miyagawa, Yasushi c/o FUJITSU LIMITED, Kawasaki-shi, Kanagawa 211-8588 (JP)
(74) Representative: Stebbing, Timothy Charles

(57) **Abstract**

A mobile communication system that encrypts data between a wireless base station and a mobile station. The mobile communication system includes a encryption synchronization deviation detecting unit (1a) that detects loss of encryption synchronization between the mobile station and the wireless base station by detecting a decompression failure of a compressed header after decryption thereof; and an encryption synchronization information notifying unit (1b) that notifies an opposite side of synchronization information when the loss of synchronization occurs.

## Description

This application is based upon and claims the benefit of priority of the prior Japanese Patent Application No. 2007-280119, filed on October 29, 2007.

An aspect of the invention relates to a technique for wirelessly communicating by performing, for example, concealment processing (encryption) of data.

To make a significant improvement of performance of a 3^{rd} Generation (3G) cellular system, a Super 3^{rd} Generation (S3G) system has been standardized internationally as Long Term Evolution (LTE) in a 3^{rd} Generation Partnership Project (3GPP), a standards organization. The goals for S3G LTE include improving spectral efficiency, improving high-speed services such as high-speed image distribution, making use of new spectrum and refarmed (reused) spectrum opportunities. The architecture that will result from this work is called EPS (Evolved Packet System) and comprises E-UTRAN (Evolved UTRAN) on the access side and EPC (Evolved Packet Core) on the core side. EPC is also known as SAE (System Architecture Evolution) and E-UTRAN is also known as LTE. Some advantages of LTE are high throughput, low latency, and FDD and TDD in the same platform. LTE will also support seamless connection to existing networks, such as GSM, CDMA and HSPA.
Further, S3G has a feature that all of the communication infrastructure for a mobile phone, in which voice and data communication are each provided by individual infrastructure in the existing systems up to 3G, are expected to be transited to "all IP" for integration into an Internet Protocol (IP) base. Consequently, it is expected to achieve a mobile system that is completely IP-based from the existing mobile system including a conventional circuit switching system. Only data communication is IP-based in existing systems.

In S3G, in a Packet Data Convergence Protocol (PDCP) layer in which Robust Head Compression (ROHC) of Transmission Control Protocol / Internet Protocol (TCP/IP) and Real-time Transport Protocol / User Datagram Protocol / Internet Protocol (RTP/UDP/IP) are performed, data communications between, for example, a wireless base station that is an E-UTRAN NodeB (eNB) and a mobile station that is a User Equipment (UE) are encrypted. As shown in the 3^{rd} Generation Partnership Project, "Security architecture (Release 7)", 3GPP TS33.102, 2006-12, V7.1.0, the eNB and the UE have parameters that vary in a similar manner, respectively. Since these parameters are synchronized, each of the eNB and the UE generates the same encryption/decryption key to perform encrypted (also referred to in this specification as "concealment") communication.

However, in a conventional PDCP layer, there is a problem that resynchronization is not performed when synchronization is lost between encryption/decryption processing in the eNB and in the UE.
Accordingly, it is desirable to provide a mobile communication system, a mobile communication method, a wireless base station, and a mobile station in which re-synchronization can take place when encryption synchronization has deviated (is lost) in the PDCP layer.
According to an aspect of the invention, there is provided a mobile communication system that encrypts data between a wireless base station and a mobile station, the mobile communication system including an encryption synchronization deviation detecting unit that detects loss of encryption synchronization between the mobile station and the wireless base station by detecting a failure to expand a compressed header after decryption; and an encryption synchronization information notifying unit that notifies an opposite side of encryption synchronization information when the loss of encryption synchronization occurs.
The present invention also embraces software for implementing the above features on a mobile station or base station , which software may be stored on a computer-readable medium.
It is to be understood that both the foregoing general description and the following detailed description are exemplary and explanatory only and are not restrictive of the embodiment, as claimed.

Reference is made, by way of example only, to the accompanying drawings in which:
FIG. 1 is a diagram illustrating an overview of encryption synchronization processing;
FIG.2 is a diagram showing a system configuration example of a mobile communication system according to a first embodiment;
FIG.3 is a diagram showing a voice call protocol stack of an S3G system and an existing circuit switching system;
FIG.4 is a diagram showing the voice call protocol stack of the S3G systems;
FIG.5 is a diagram showing a packet call protocol stack of the S3G system and the existing circuit switching system;
FIG.6 is a diagram showing the packet protocol stack of the S3G systems;
FIG.7 is a diagram illustrating protocols in FIG.3 to FIG.6;
FIG.8 is a block diagram showing a function of a layer 2 in a downlink of an eNB;
FIG.9 is a diagram illustrating data processing of the downlink in the layer 2 of the eNB;
FIG. 10 is a diagram illustrating the data processing of the downlink in the layer 2 of a UE;
FIG.11 is a diagram illustrating encryption processing;
FIG.12 is a diagram illustrating synchronization deviation of the encryption processing;
FIG.13 is a sequence diagram illustrating the encryption synchronization processing;
FIG.14 is a diagram illustrating synchronization of the encryption processing;
FIG.15 is a detailed sequence diagram illustrating the encryption synchronization processing;
FIG.16 is a diagram illustrating the synchronization of an HFN in the downlink;
FIG.17 is a diagram illustrating the synchronization of the HFN in the uplink;
FIG.18 is a function block diagram of the eNB;
FIG.19 is a function block diagram of the UE;
FIG.20 is a diagram showing an example of a PDU format of a PDCP;
FIG.21 is a diagram illustrating a PDU_Type;
FIG.22 is a diagram showing an example of the PDU format of a PDCP sequence number;
FIG.23 is a diagram illustrating the PDU format of FIG. 20;
FIG.24 is a sequence diagram illustrating the encryption synchronization processing according to a second embodiment;
FIG.25 is a detailed sequence diagram illustrating the encryption synchronization processing;
FIG.26 is a diagram illustrating an upper layer and a message that is transmitted and received according to a third embodiment;
FIG.27 is a sequence diagram illustrating the encryption synchronization processing; and
FIG.28 is a detailed sequence diagram illustrating the encryption synchronization processing.

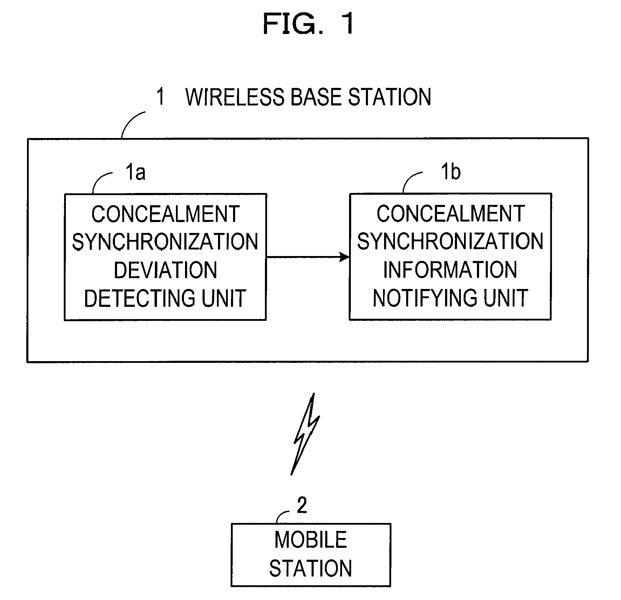

The system disclosed in a preferred embodiment will be described below in detail with reference to the figures. FIG.1 is a diagram illustrating an overview of encryption (or concealment) synchronization processing. FIG.1 shows a wireless base station 1 and a mobile station 2. The wireless base station 1 and the mobile station 2 in FIG. 1 include encryption parameters that vary in a similar manner, respectively, and generate, based on these parameters, an encryption key or cipher key for encryption and decryption of data. The wireless base station 1 and the mobile station 2 can transmit and receive the data by performing encryption processing and decryption processing by the same generated encryption key. (Below, the term "encryption" includes "decryption" where the context allows).

As shown in FIG. 1, the wireless base station 1 includes a encryption synchronization deviation detecting unit 1a and a encryption synchronization information notifying unit 1b. The encryption synchronization deviation detection unit 1a detects deviation of encryption synchronization of the wireless base station 1 and the mobile station 2 by detecting expansion failure of a compressed header (failure to decompress the header) after the decryption of the data received from the mobile station 2.

For example, when one or more parameters used to generate the encryption key deviate between the wireless base station 1 and the mobile station 2, the wireless base station 1 cannot properly perform the decryption of the data received from the mobile station 2. Thus, the compressed header of the data received from the mobile station 2 includes incorrect information. In this case, the mobile station 1 fails to expand (decompress) the compressed header. Accordingly, the encryption synchronization deviation detection unit 1a detects deviation or loss of the encryption synchronization between the wireless base station 1 and the mobile station 2.

When such loss of synchronization is detected by the encryption synchronization deviation detection unit 1a, the encryption synchronization information notifying unit 1b notifies the mobile station 2 at the opposite side of the encryption synchronization information including the encryption parameter (s) in a PDCP layer. This enables the mobile station 2 to re-synchronize the encryption processing with the wireless base station 1.

Even though not shown in FIG.1, the mobile station 2 has the same function, in this respect, as that of the wireless base station 1. Accordingly, the mobile station 2 also detects deviation of the encryption synchronization based on the compressed header of the data received from the wireless base station 1, and transmits the encryption synchronization information including the encryption parameter(s) to the wireless base station 1 to allow encryption synchronization with the wireless base station 1 to be restored.

Next, a preferred first embodiment will be described in detail with reference to figures.

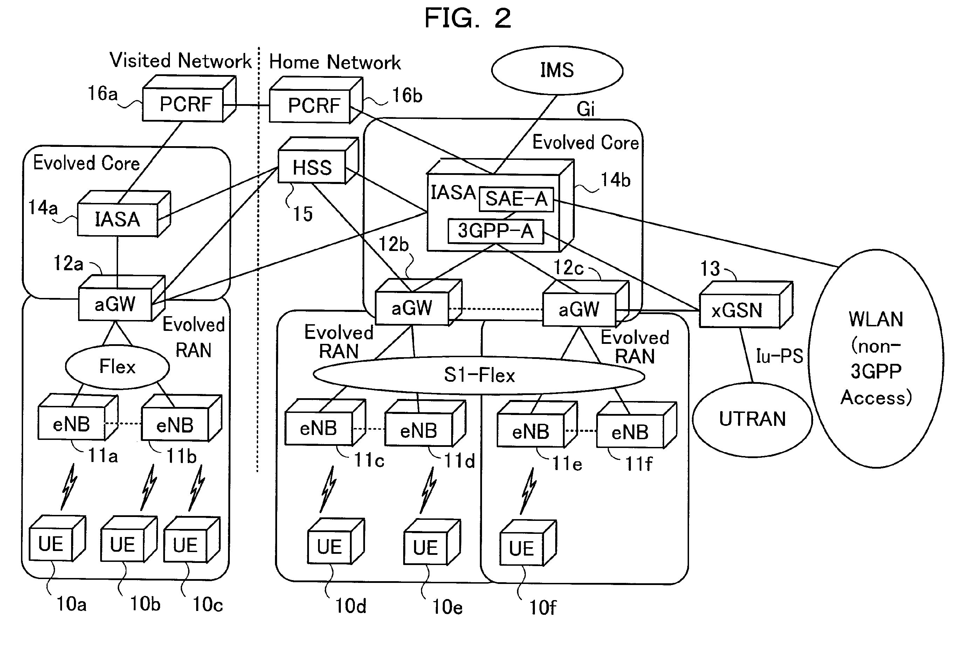

FIG. 2 is a diagram showing a network configuration example of a mobile communication system according to the first embodiment. As shown in FIG. 2, the mobile communication network of the S3G includes UEs 10a to 10f, eNBs 11a to 11f, E-UTRAN Access Gateways (aGW) 12a to 12c, a serving/gateway General packet radio service Support Node (xGSN) 13, Inter AS Anchors (IASA) 14a and 14b, a Home Subscriber Server (HSS) 15, a Policy and Charging Rule Functions (PCRF) 16a and 16b.

The UEs 10a to 10f are, for example, mobile cell phones. The eNBs 11a to 11f have functions both of a NodeB and a Radio Network Controller (RNC) used in systems of a previous generation before the S3G.

The aGWs 12a to 12c manage and control the eNBs 11a to 11f to mediate transmission and reception of data between the UEs 10a to 10f and the IASAs 14a and 14b.
The IASAs 14a and 14b having a function such as that of a router connecting the UEs 10a to 10f to an IP Multimedia Subsystem (IMS) and the PCRFs 16a and 16b. The IASAs 14a and 14b are also connected to the HSS 15 for storing subscriber profiles.

The IASAs 14a and 14b include an SAE-Anchor (SAE-A) as an anchor device for enabling interconnection with an external network other than the S3G and a 3GPP Anchor (3GPP-A) as an anchor device specified by the 3GPP. The SAE-A is connected to a Wireless Local Area Network (WLAN). The 3GPP-A is connected to an xGSN 13. The xGSN 13 is connected to a UTRAN network. The mobile communication network of FIG.2 is divided broadly into a Home Network and a Visited Network.

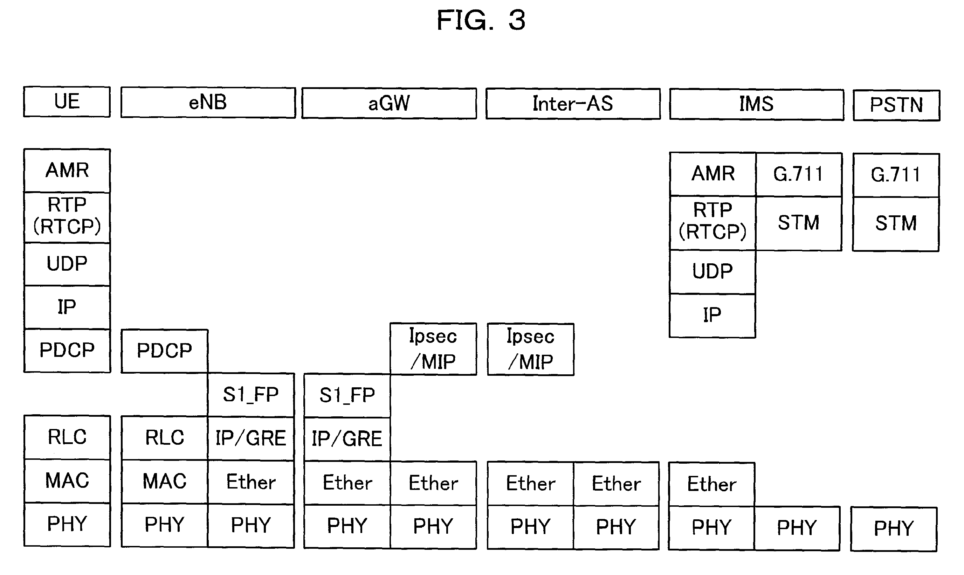

FIG.3 is a diagram showing a voice call protocol stack of a S3G system and an existing circuit switching system. The connection of a voice call between the S3G system and the existing circuit switching system is performed based on the protocol stack shown in FIG.3.

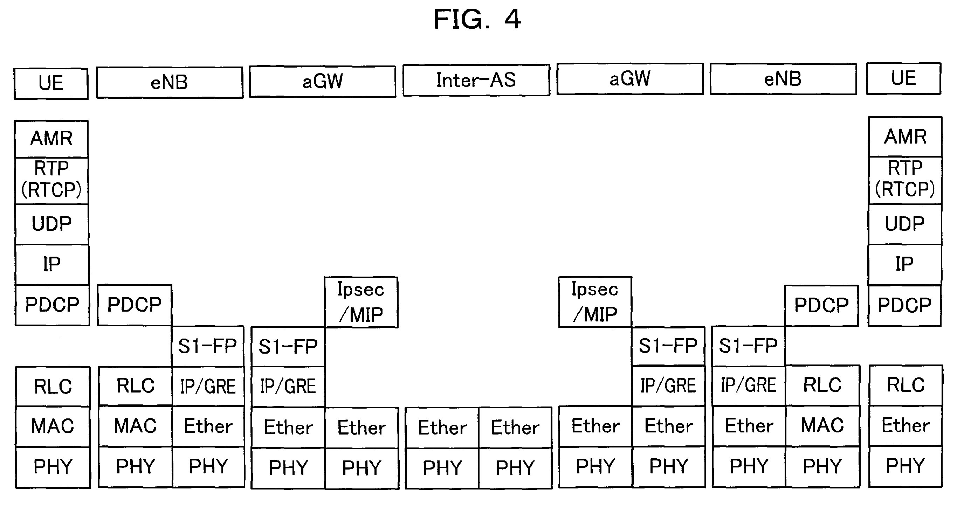

FIG.4 is a diagram showing a voice call protocol stack of a S3G systems. The connection of a voice call between S3G systems is performed based on the protocol stack shown in FIG.4.

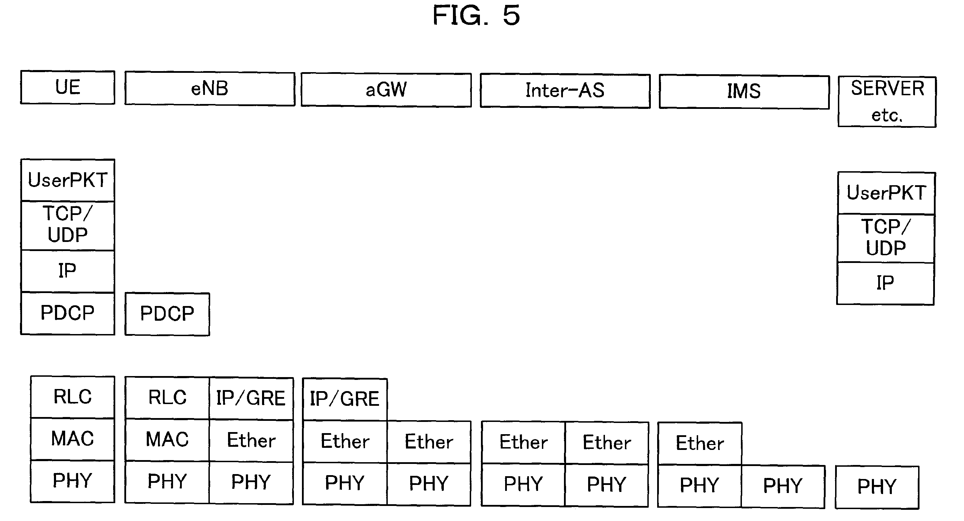

FIG.5 is a diagram showing a packet call protocol stack of a S3G system and an existing circuit switching system. The connection of a packet call between the S3G system and the existing circuit switching system is performed based on the protocol stack shown in FIG.5.

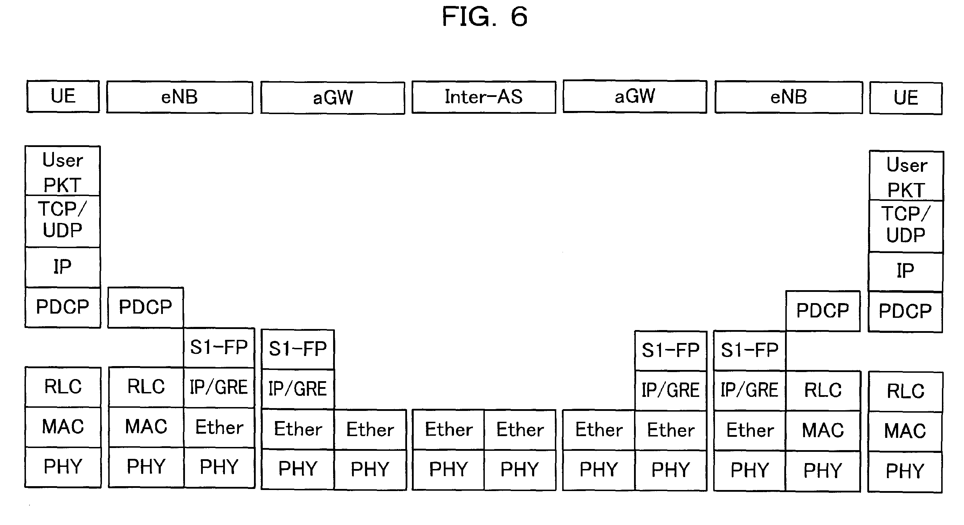

FIG.6 is a diagram showing a packet call protocol stack of a S3G systems. The connection of a packet call between S3G systems is performed based on the protocol stack shown in FIG. 6.

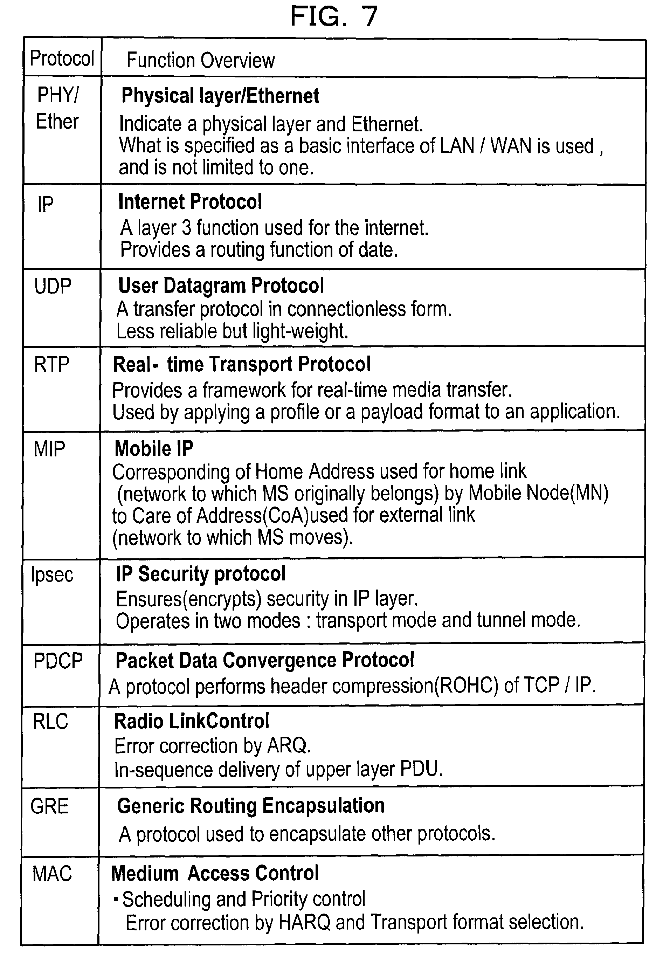

FIG. 7 is a diagram illustrating the protocol shown in FIG. 3 to FIG.6. Each protocol of the protocol stack shown in FIG.3 to FIG.6 has a function shown in FIG.7.
In any communication utilizing the protocol stacks of FIG. 3 to FIG. 6, the UE and the eNB have a PDCP layer and perform header compression of the TCP/IP or the RTP/UDP/IP to perform data communication.

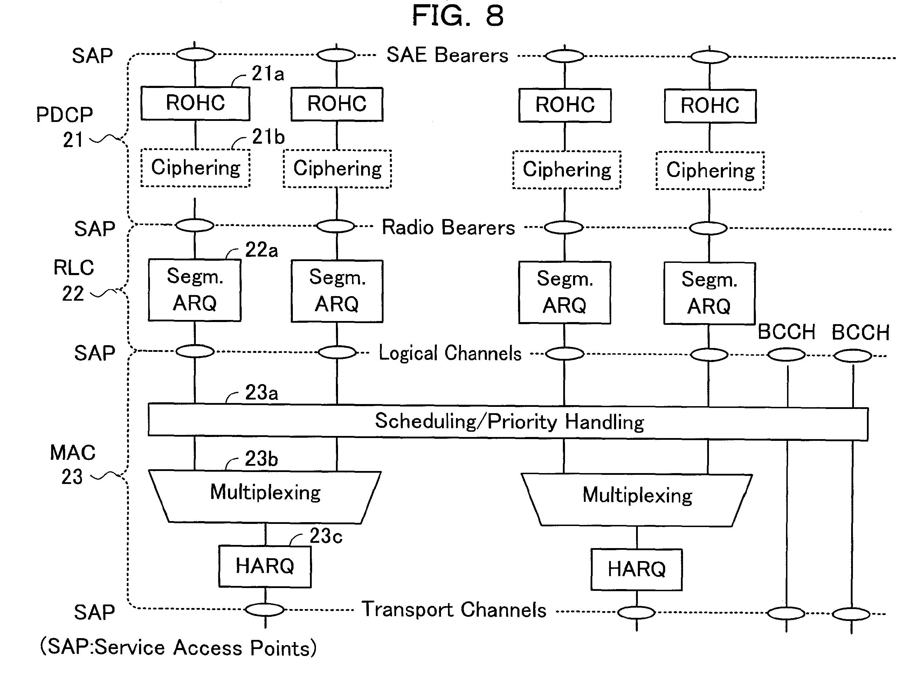

FIG.8 is a block diagram showing a function of a layer 2 in a downlink of the eNB. A PDCP protocol, an RLC protocol, and a MAC protocol correspond to the layer 2 of the eNB. The eNB having the function shown in FIG.8 by the PDCP protocol, the RLC protocol, and the MAC protocol performs the data communication of the downlink. A dotted frame 21 indicates a function by (which is part of) the PDCP protocol. A dotted frame 22 indicates a function by the RLC protocol. A dotted frame 23 indicates a function by the MAC protocol.

The PDCP protocol has functions of an ROHC 21a and a Ciphering 21b. The ROHC 21a performs compression processing of the data transmitted from an upper layer. The Ciphering 21b performs encryption processing of the compressed data.

The RLC protocol has a function of a Segm. ARQ 22a. The Segm. ARQ 22a segments (Segm: segmentation) the data that is compressed and encrypted by the PDCP into sizes that can be wirelessly communicated. Further, the Segm. ARQ 22a performs an automatic repeat request (ARQ) of the data if the wireless communication of the data has failed.

The MAC protocol has functions of a Scheduling/Priority Handling 23a, a Multiplexing 23b, and a Hybrid ARQ (HARQ) 23c. The Scheduling/Priority Handling 23a performs scheduling of the transmitted data such as assigning wireless resources to the segmented data. The Multiplexing 23b multiplexes the scheduled data. The HARQ 23c performs error correction coding processing and retransmission control. The data of the HARQ 23c is output to a lower physical layer.

The function of layer 2 in the uplink of the UE has substantially the same function block as in FIG.8.

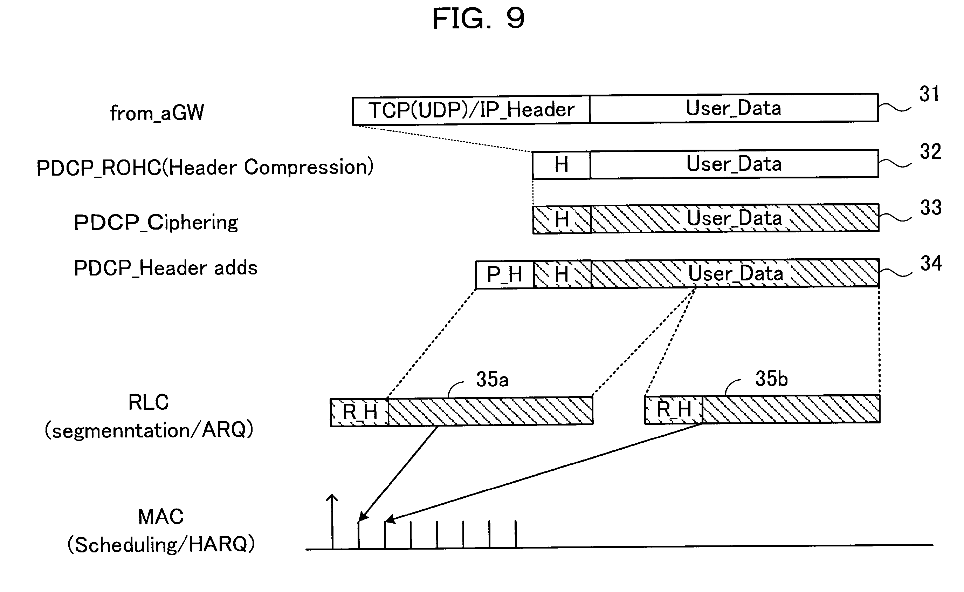

FIG.9 is a diagram illustrating data processing of the downlink in the layer 2 of the eNB. FIG.9 shows data (packet) 31 of the TCP (UDP) /IP received from the aGW. The header of data 31 is a large amount of data since a header of each protocol is added. Thus, the eNB compresses the header of data 31 by performing ROHC header compression to obtain data 32.

The eNB performs encryption processing of the header-compressed data 32 to obtain data 33.
The eNB adds a PDCP header to encrypted data 33 to obtain data 34. The above described header compression and encryption processing are performed in the PDCP layer.

The eNB segments data 34 into sizes that can be wirelessly communicated and performs automatic repeat request on data 34 to obtain data 35a and 35b. This processing is performed in an RLC layer.
The eNB performs the scheduling and the automatic repeat request of the segmented data 35a and 35b. This processing is performed in a MAC layer. The scheduled data 35a and 35b are wirelessly transmitted to the UE.

As described above, the data of the RTP/UDP/IP (voice call) or the data of the TCP/IP (packet call) transmitted from a higher-order device (aGW) has a large header including the added header of each protocol. Therefore, in a network having a limited section of bandwidth called a wireless section, the function for compressing the header is necessary to improve use efficiency of the wireless section. Thus, as described above, the PDCP protocol compresses the header of the data by ROHC and then encrypts it.

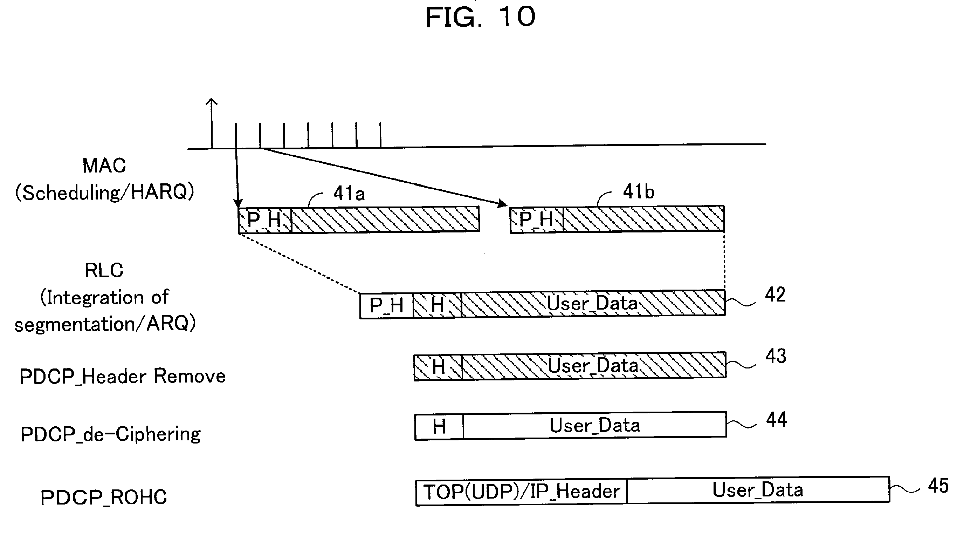

FIG.10 is a diagram illustrating data processing of the downlink in the layer 2 of the UE. The UE obtains data 41a and 41b from a wireless signal received from the eNB based on the scheduling and the automatic repeat request. This processing is performed in the MAC layer.

The UE performs integration of the data 41a and 41b and the automatic repeat request to obtain data 42. This processing is performed in the RLC layer.
The UE removes the PDCP header from the integrated data 42 to obtain data 43. The UE releases the encryption of the data 43 in which the PDCP header is removed to obtain data 44. The UE performs header expansion of the data 44 in which the encryption is released to obtain data 45. The UE checks the expanded header of the data 45 by Cyclic Redundancy Checking (CRC) and the like. If the header information is correct, the upper layer processing is performed. This decryption and data expansion processing are performed in the PDCP layer.

The processing of the layer 2 in the uplink is the same as in FIG.9 and FIG. 10. That is, the UE performs the processing of FIG.9, and the eNB performs the processing of FIG.10.

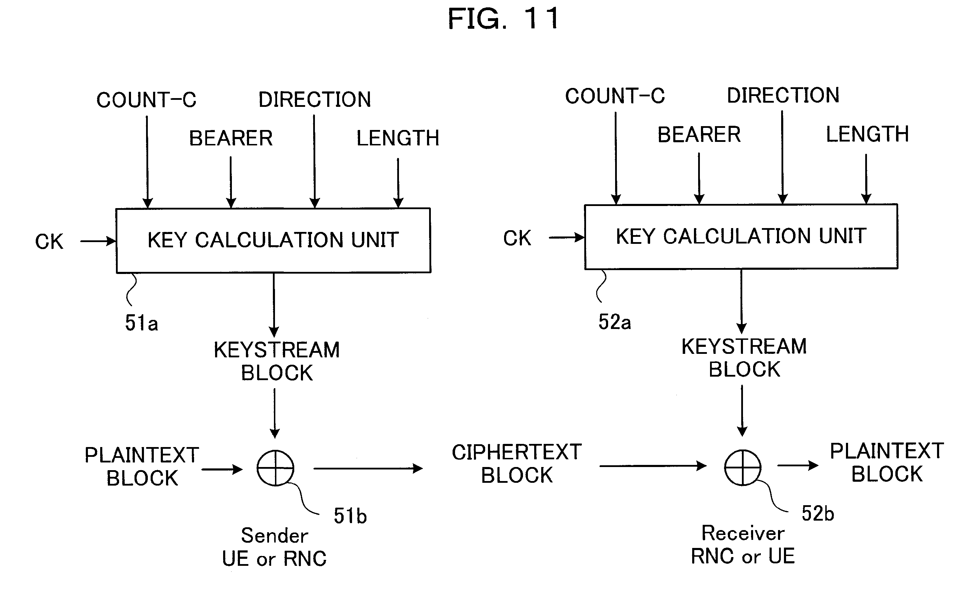

FIG. 11 is a diagram illustrating the encryption processing. In the S3G system, it has been considered to employ an encryption algorithm called "KASUMI" in the 3GPP. This encryption algorithm, a common key encryption method, performs encryption processing by an operation called f8. Decoding processing is performed also by this operation f8.

FIG.11 shows key calculation units 51a and 52a and Exclusive-OR (EOR) units 51b and 52b. FIG.11 shows that the key calculation unit 51a and the EOR unit 51b conceal the data, and the key calculation unit 52a and the EOR unit 52b restore the concealed data.

Concealed parameters such as a COUNT-C including a Hyper Frame Number (HFN) and a Sequence Number (SN), a Ciphering Key (CK), a BEARER, a DIRECTION, a LENGTH are input to the key calculation unit 51a. The key calculation unit 51a calculates a KEY STREAM BLOCK (KSB) based on the input concealed parameters by using an algorithm called f8.

The KSB calculated by the key calculation unit 51a and the data to be concealed (PLAINTEXTBLOCK) are input to the EOR unit 51b. The EOR unit 51b performs an exclusive operation on the KSB and the data to calculate the concealed data (CIPHERTEXTBLOCK).

The key calculation unit 52a and the EOR unit 52b have the same functions as those of the key calculation unit 51a and the EOR unit 51b. By performing the exclusive operation on the concealed data by the KSB output from the key calculation unit 52a, the EOR unit 52b restores the concealed data and obtains the original data.

The UE and the eNB have a encryption processing function shown in FIG.11. For example, the eNB wirelessly transmits the data concealed by the key calculation unit 51a and the EOR unit 51b and restores, by the key calculation unit 52a and the EOR unit 52b, the concealed data received from the UE. The UE wirelessly transmits the data concealed by the key calculation unit 51a and the EOR unit 51b and restores, by the key calculation unit 52a and the EOR unit 52b, the concealed data received from the eNB. Consequently, the eNB and the UE have the concealed parameter for the downlink and the concealed parameter for the uplink, respectively.

The COUNT-C of the concealed parameter that is input to the key calculation units 51a and 52a is a encryption sequence number of 32 bits in total including the HFN and the SN that is added in the PDCP layer. The HFN is incremented in each interval of the SN. Therefore, the KSB that varies at a transmitting side and a receiving side needs to correspond to each other so that the correct data is concealed and restored. That is, if the HFN is deviates between the transmitting side and the receiving side, the data cannot be restored properly. Thus, the HFN needs to be synchronized between the transmitting side and the receiving side.

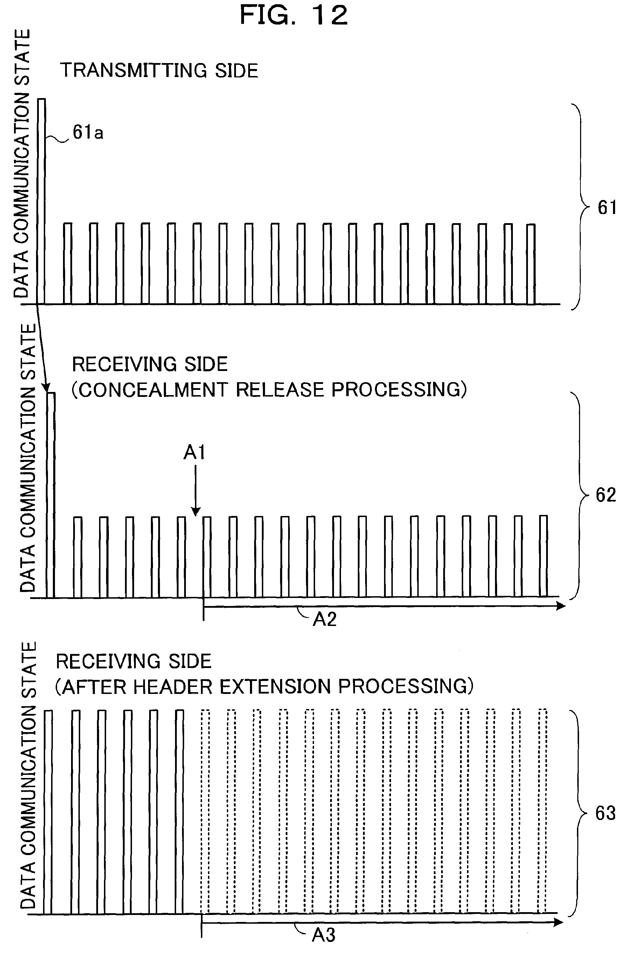

FIG.12 is a diagram illustrating synchronization deviation of the encryption processing. Data 61 in FIG.12 indicates, for example, the data after the header compression and the encryption processing at the transmitting side of the eNB in the downlink. Data 62 indicates, for example, the data prior to decryption processing and header expansion processing at the receiving side of the UE in the downlink. Data 63 indicates the data after the header expansion processing at the receiving side.

Data 61a has an Instruction (IR) header and is larger than the data transmitted later. This is because the data 61a stores context information for expanding the data compressed at the receiving side.

As shown by an arrow A1 in FIG.12, the encryption synchronization of the transmitting side and the receiving side is assumed to be deviated. That is, it is assumed that the HFNs of the transmitting side and the receiving side have different values. In this case, since different KSBs are calculated at the transmitting side and the receiving side, the data 62 received during arrow A2 is obtained as incorrect data.

Next, the data expansion processing (decompression/decoding) at the receiving side is performed. The header expansion processing is performed using the incorrect data 62 and the correct context information that has already been received. Therefore, the expanded header information includes an error, then the data 63 shown by an arrow A3 is discarded by normality confirmation after the header expansion.

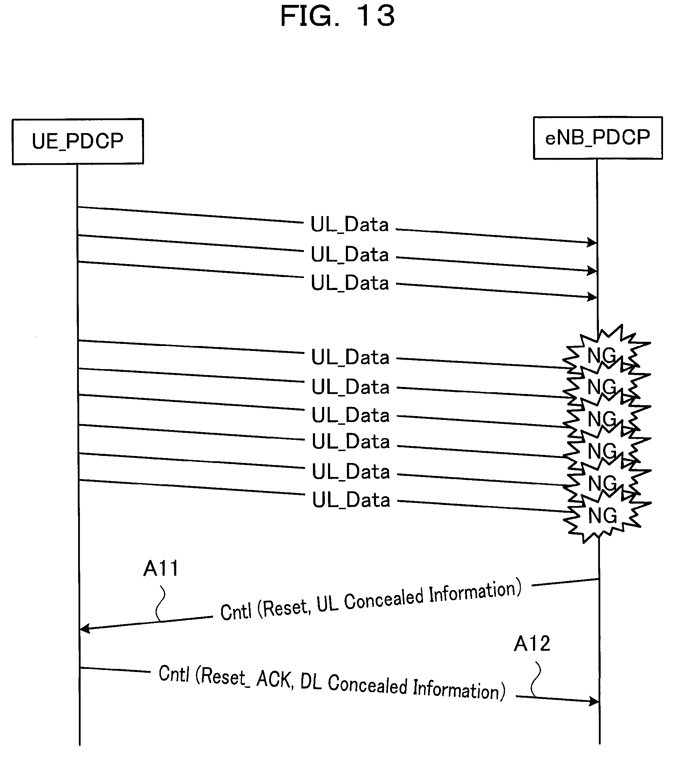

FIG.13 is a sequence diagram illustrating encryption synchronization processing. FIG.13 shows interaction between the PDCP layer of the UE (UE_PDCP) and the PDCP layer of the eNB (eNB_PDCP).

As described above, the UE_PDCP and the eNB_PDCP have an encryption parameter for the downlink and one for the uplink, respectively. To perform downlink communication, the UE_POCP and the eNB_PDCP perform wireless communication by performing the encryption processing of the data usingparameter for the downlink. To perform uplink communication, the UE_PDCP and the eNB_PDCP perform wireless communication by encrypting the data by the parameter for the uplink. FIG.13 shows the processing in the uplink (the UE is the transmitting side, and the eNB is the receiving side).

The eNB_PDCP of the receiving side expands (decompresses) of the uplink data received from the UE and performs a header check of the expanded header. For example, a CRC check of the expanded header is performed.

When the eNB_PDCP of the receiving side determines, by the header check, that the header is incorrect repeatedly a predetermined number of times, it is determined that the encryption synchronization has deviated (failed). For example, the eNB_PDCPof the receiving side, as shown in FIG. 13, determines that the encryption synchronization has been lost when the header expansion has failed repeatedly six times.

The eNB_PDCP of the receiving side transmits reset information to the UE_PDCP to reset the processing of the UE_PDCP at the transmitting side. At this time, the encryption parameter for the uplink (HFN) is also transmitted. For example, as shown by an arrow A11 in FIG.13, a Reset (reset information) and a UL (Up Link) encryption information (encryption parameter) are transmitted to the UE_PDCP in a control frame (Cntl) of the PDCP.

When receiving the reset information and the encryption parameter from the eNB_PDCP of the receiving side, the UE_PDCP of the transmitting side resets the processing of the UE_PDCP and sets the received encryption parameter. This enables the encryption processing of the uplink communication to be synchronized.

When receiving the reset information and the encryption parameter for the uplink from the eNB_PDCP of the receiving side, the UE_PDCP of the transmitting side transmits the reception of the reset information and the encryption parameter for the downlink to the eNB_PDCP of the receiving side. For example, as shown by an arrow A12 in FIG. 13, a Reset_ACK (reset response) and a DL (Down Link) encryption information are transmitted to the eNB_PDCP in the control frame. This enables the encryption processing of the downlink communication to be synchronized.

The uplink is described above as an example. However, description of the downlink is the same as in the uplink. In this case, the eNB is the transmitting side, and the UE is the receiving side.

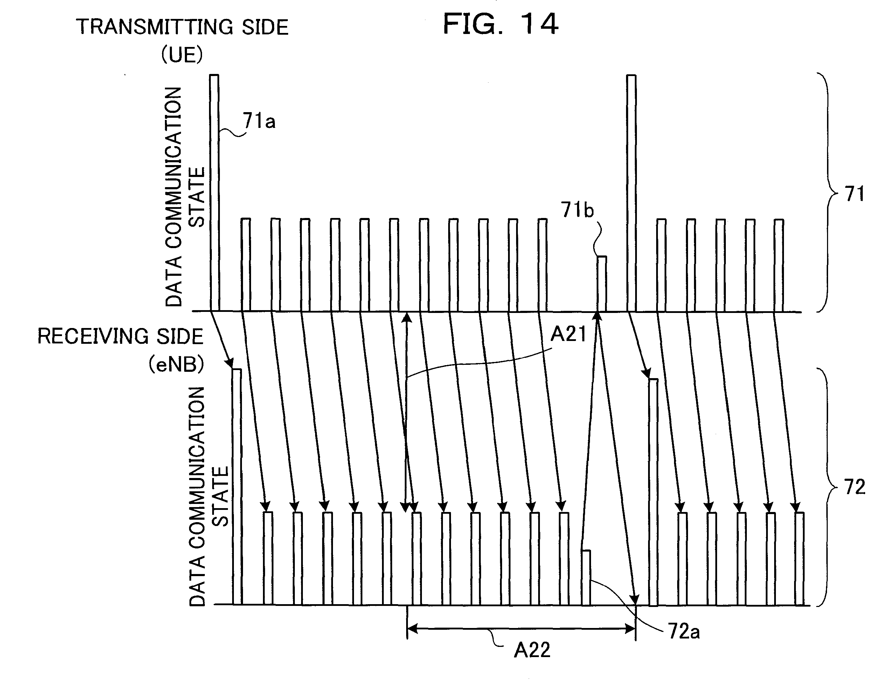

FIG.14 is a diagram illustrating the synchronization of the encryption processing. Data 71 in FIG.14 indicates the header-compressed and encryption data of the transmitting side. Data 72 indicates the data prior to the header expansion processing after the decryption processing of the receiving side. The uplink is described below as an example. It is assumed that the transmitting side is the UE, and the receiving side is the eNB.

Data 71a is data having an IR header. The IR header stores the context information for expanding the data that is compressed at the receiving side.
As shown by an arrow A21 in FIG.14, it is assumed that the encryption synchronization of the transmitting side and the receiving side has deviated. That is, it is assumed that the HFNs of the transmitting side and the receiving side have different values. In this case, since different KSBs are calculated at the transmitting side and the receiving side, the data 72 received during arrow A22 is obtained as incorrect data.

When the incorrect data 72 is obtained, the receiving side cannot perform the header expansion properly. The receiving side detects failure of the header expansion repeatedly the predetermined number of times and then determines that the encryption synchronization has deviated.
When the deviation of the synchronization is detected, as shown in data 72a of FIG.14, the receiving side transmits the control frame including the reset information and the UL encryption information to the transmitting side.

When the control frame is received from the receiving side, the transmitting side resets the processing of the PDCP layer and sets the HFN of the UL included in the control frame to the encryption processing. This enables the encryption synchronization of the uplink communication to be taken.

Further, as shown in data 71b of FIG.14, the transmitting side transmits the reception of the reset information and the control frame including the DL encryption information to the receiving side.
When the control frame is received from the transmitting side, the receiving side resets the processing of the PDCP layer and sets the HFN of the DL included in the control frame to the encryption processing. This enables the encryption synchronization of the downlink communication to be taken.

After that, the transmitting side and the receiving side can restart a proper data communication.
When the number of determinations of synchronization deviation is assumed to be six and data transmission interval is 20 ms, deviation of the encryption synchronization is detected within 120 ms. Then the encryption synchronization can be taken by performing a reset procedure with the opposite side.

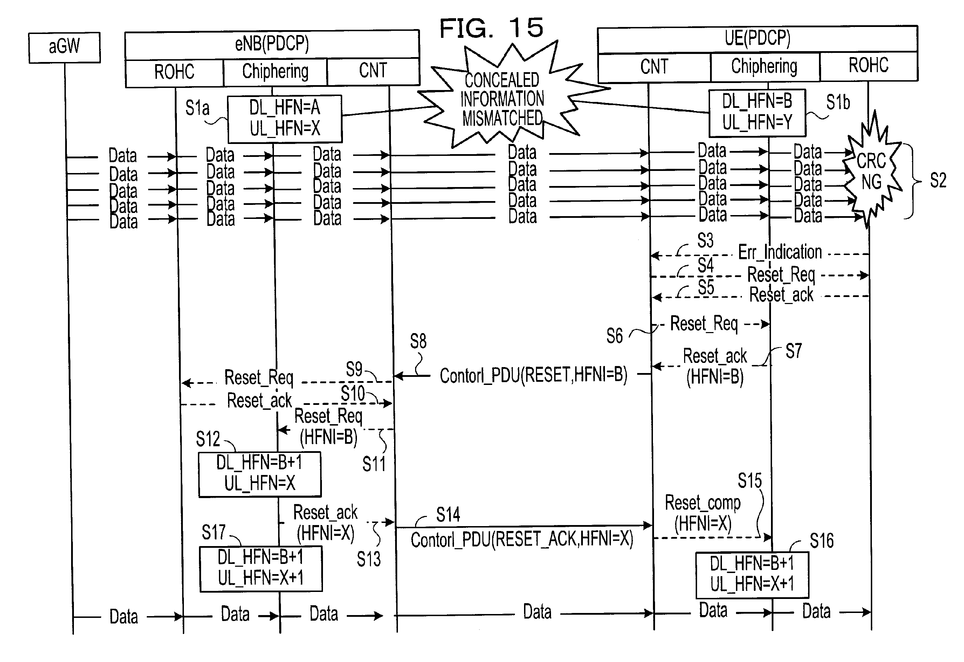

FIG.15 is a detailed sequence diagram illustrating the encryption synchronization processing. FIG.15 shows an example of the downlink in which data communication is performed from the eNB to the UE. ROHC, Ciphering, and CNT (Control) in FIG.15 indicate functions of the PDCP of the eNB and the UE. The CNT controls the entire PDCP layer and performs state management of the PDCP and header processing of the PDCP. The Ciphering performs encryption/decryption processing of the PDCP. The ROHC performs header compression/ expansion processing. A solid line arrow in FIG.15 shows a flow of a U-plane signal that is user data. A dotted line shows a flow of a control signal in the eNB and the UE.

As shown in step S1a and step S1b, it is assumed that the synchronization of the HFN for the downlink (DL_HFN) and the HFN for the uplink (UL_HFN) of the eNB and the UE has deviated. For example, as shown in FIG.15, it is assumed that the DL_HFN of the eNB is A, the DL_HFN of the UE is B, and the encryption synchronization in the downlink communication has deviated. Further, it is assumed that the DL HFN of the eNB is X, the DL_HFN of the UE is Y, and the encryption synchronization in the uplink communication has deviated.

As shown in step S2, the ROHC, the Ciphering, and the CNT of the eNB perform the header compression, the encryption processing, and the header processing of the PDCP of the data received from the aGW, and then transmits the data to the UE.

The CNT, the Ciphering, and the ROHC of the UE perform the header processing, the decryption processing, and the header expansion processing of the PDCP of the data received from the eNB.
As described in step S1a and step S1b, the eNB and the UE have different DL_HFN. Therefore, in the Ciphering of the UE, the encryption of the downlink data is released by mistake, and then the header information includes an error. Then the header check after the header expansion processing by the ROHC of the UE detects a header abnormality (CRCNG).

As shown in step S3, the ROHC of the UE counts the number of successive failures of the header expansion. When the value reaches a predetermined value, an Err_Indication indicating occurrence of encryption synchronization error is transmitted to the CNT. For example, as shown in FIG.15, when the ROHC of the UE detects the CRCNG five times, the ROHC transmits the Err_Indication to the CNT.

As shown in step S4, when receiving the Err_Indication from the ROHC, the CNT of the UE transmits, to the ROHC, a Reset_Req requiring the ROHC to perform reset processing.
As shown in step S5, the ROHC of the UE performs a reset procedure in response to the Reset_Req from the CNT and transmits a Reset_ack, a response to the reset request, to the CNT.

As shown in step S6, when receiving the Reset_ack from the ROHC, the CNT of the UE transmits the Reset_Req to the Ciphering.
As shown in step S7, the Ciphering of the UE performs the reset procedure in response to the Reset_Req from the CNT and transmits the Reset_ack to the CNT. At this time, the Ciphering sets the value of the DL_HFN used for the encryption processing to an HFN Indicator (HFNI) and then transmits the value to the CNT. In the example in FIG.15, the value is set to HFNI=B and then is transmitted to the CNT.

As shown in step S8, the CNT of the UE transmits a Control Protocol Data Unit (Control PDU) that is a control frame by including the reset information and the HFNH (B) therein to the eNB that is an opposed device.

As shown in step S9, when receiving the control PDU from the UE, the CNT of the eNB transmits the Reset_Req to the ROHC.
As shown in step S10, the ROHC of the eNB performs the reset procedure in response to the Reset_Req and transmits the Reset_ack that is a response to the reset request.

As shown in step S11, when receiving the Reset_ack from the ROHC, the CNT of the eNB transmits the Reset_Req to the Ciphering. At this time, the CNT of the eNB also transmits an HFNI received from the UE to the Ciphering.

As shown in step S12, the Ciphering of the eNB performs the reset procedure in response to the Reset_Req from the CNT and resets the encryption processing function. The value of the HFNI received from the CNT is set to the DL_HFN. At this time, 1 is added for the setting. For example, as shown in FIG.15, B+1 is set to the DL_HFN.

As shown in step S13, the Ciphering of the eNB transmits, to the CNT, the Reset_ack that is a response to the Reset_Req. At this time, the Ciphering sets the value of the UL_HFN used for the encryption processing of the uplink to the HFNI to instruct the CNT. In the example of FIG.15, the value is set to HFNI=X and is transmitted to the CNT.

As shown in step S14, the CNT of the eNB transmits, to the UE that is the opposed device, the control PDU by including a reset acknowledge (RESET_ACK) indicating a response of the control PDU of step S8 and an HFNI (X) therein.

As shown in step S15, when receiving the control PDU from the eNB, the CNT of the UE transmits a Reset_comp indicating a reset completion to the Ciphering. At this time, the HFNI received from the eNB is also transmitted to the Ciphering.

As shown in step S16, the Ciphering of the UE sets the HFNI received from the eNB to the UL_HFN in response to the Reset_comp from the CNT. At this time, 1 is added for the setting. For example, as shown in FIG.15, X+1 is set to the UL_HFN.

Further, the Ciphering of the eNB adds 1 to the value of the UL_HFN. For example, as shown in FIG.15, the value of the DL_HFN is B+1.
As shown in step S17, the Ciphering of the eNB adds 1 to the value of the UL_HFN. For example, as shown in FIG.15, the value of the UL_HFN is X+1.

By the above described processing, the values of the DL_HFN and the UL_HFN of the eNB and the UE are synchronized.
In this manner, based on the failure of the header expansion, the deviation of the encryption synchronization of the eNB and the UE is detected. In the system disclosed in the present invention, the HFN is notified to the opposite side in the PDCP layer. This enables the encryption synchronization of the eNB and the UE to be performed.

In FIG.15, the eNB and the UE add 1 to the value of the HFN that is notified to each other to set the Ciphering. It is apparent that the Ciphering can be set by the value of the HFN that is notified to each other without adding 1.

In the above description, the UE transmits only the DL_HFN to the eNB of the opposite side. The UL_HFN can be transmitted as well. In this case, for example, the eNB of the opposite side transmits no UL_HFN to the UE in step S14.

The downlink is described above as an example. However, operation of the uplink is substantially the same as in the downlink. For example, the places of the eNB and the UE in FIG. 15 are just replaced with each other.

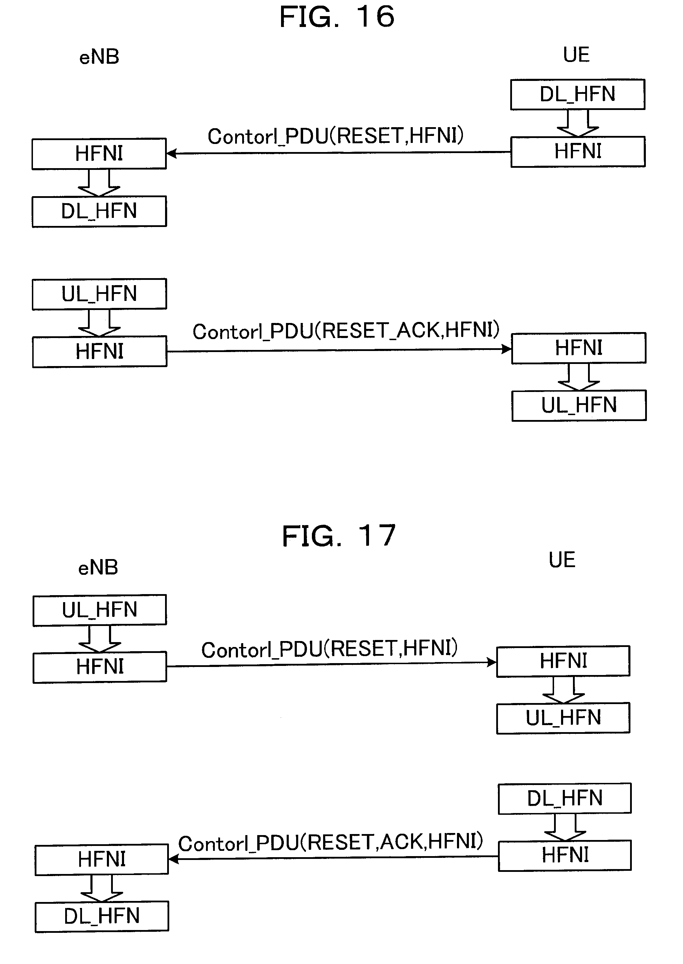

FIG.16 is a diagram illustrating the synchronization of the HFN in the downlink. First, at the UE side, it is assumed that header expansion failure of the downlink data is detected repeatedly the predetermined number of times, then the deviation of the synchronization of the HFN is detected.

As shown in FIG.16, the UE sets the DL_HFN to the HFNI. Then the UE transmits the control PDU including the reset information and the HFNI to the eNB.
The eNB obtains the HFNI from the control PDU transmitted from the UE and sets the DL_HFN that is set to the obtained HFNI to its DL_HFN. Consequently, the synchronization of the DL_HFN of the eNB and the UE is taken.

Next, the eNB sets its UL_HFN to the HFNI. Then the eNB transmits, to the UE, the control PDU including the reset acknowledge indicating a response of the reset information and the HFNI.

The UE obtains the HFNI from the control PDU transmitted from the eNB and sets the UL_HFN of the eNB that is set to the obtained HFNI to its UL_HFN. Consequently, the synchronization of the UL_HFN of the eNB and the UE is taken.

In this manner, the eNB and the UE can achieve synchronization of the HFN in the downlink. In FIG.16, 1 is not added to the value of the HFI. However, as described in FIG. 15, 1 can be added at the setting of the value of the HFN.

FIG.17 is a diagram illustrating the synchronization of the HFN in the uplink. First, at the eNB side, it is assumed that header expansion failure of the uplink communication is detected repeatedly the predetermined number of times, then the deviation of the synchronization of the HFN is detected.

As shown in FIG.17, the eNB sets the UL_HFN to the HFNI. Then the eNB transmits, to the UE, the control PDU including the reset information and the HFNI.
The UE obtains the HFNI from the control PDU transmitted from the eNB and sets the UL_HFN of the eNB that is set to the obtained HFNI to its UL_HFN. Consequently, the synchronization of the UL_HFN of the eNB and the UE is achieved.

Next, the UE sets its DL_HFN to the HFNI. Then the UE transmits, to the eNB, the control PDU including the reset acknowledge indicating a response of the reset information and the HFNI.

The eNB obtains the HFNI from the control PDU transmitted from the UE and sets the DL_HFN of the UE that is set to the obtained HFNI to its DL_HFN. Consequently, the synchronization of the DL_HFN of the eNB and the UE is achieved.

In this manner, the eNB and the UE can achieve synchronization of the HFN in the uplink. In FIG.17, 1 is not added to the value of the HFI. However, as described in FIG. 15, 1 can be added at the setting of the value of the HFN.

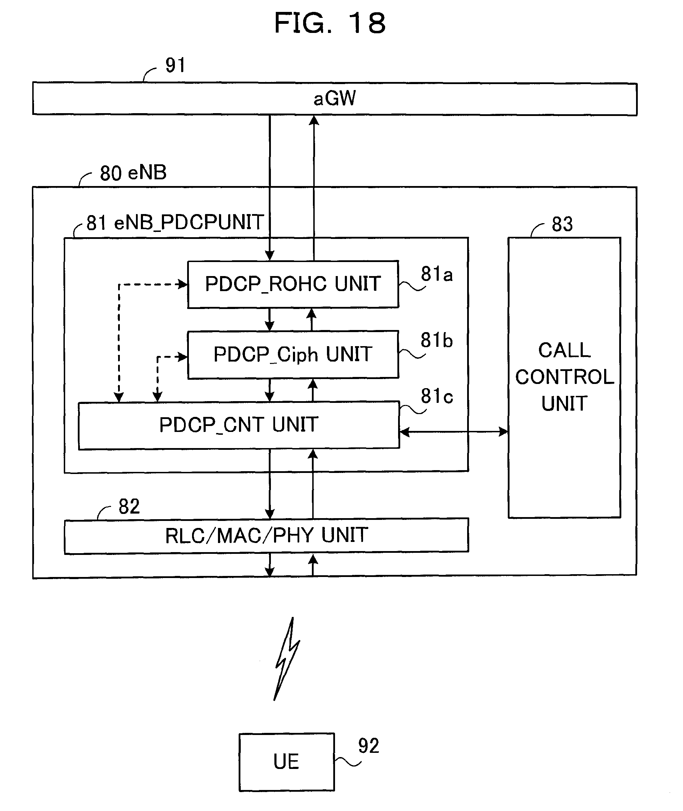

FIG.18 is a function block diagram of the eNB. As shown in FIG. 18, an eNB 80 includes an eNB_PDCP unit 81, an RLC/MAC/PHY unit 82, and a call control unit 83. The eNB_PDCP unit 81 is a function that is achieved by the PDCP layer. The RLC/MAC/PHY unit 82 is a function that is achieved by the RLC/MAC/PHY layer. FIG.18 also shows an aGW 91 and a UE 92. A solid line arrow in FIG.18 shows a flow of the U-plane signal, and a dotted line shows a flow of the control signal in the device.

The eNB_PDCP unit 81 includes a PDCP_ROHC unit 81a, a PDCP_Ciph unit 81b, and a PDCP_CNT unit 81c. The function of the PDCP_ROHC unit 81a substantially corresponds to the function of the ROHC of the eNB described in FIG. 15. The function of the PDCP_Ciph unit 81b substantially corresponds to the function of the function of the Ciphering. The function of the PDCP_CNT unit 81c substantially corresponds to the function of the CNT.

The PDCP_ROHC unit 81a performs the header compression of the user data received from the aGW 91, and then outputs the header compressed user data to the PDCP_Ciph unit 81b. The PDCP_ROHC unit 81a performs the header expansion of the user data from a UE 92 in which the encryption is released by the PDCP_Ciph unit 81b, and transmits the user data to the aGW 91.

The PDCP_ROHC unit 81a detects the deviation of the synchronization of the encryption processing. The PDCP_ROHC unit 81a performs, for example, the header check of the user data, by the CRC, in which the header is expanded. When a CRC error of the header is detected repeatedly the predetermined number of times, the PDCP_ROHC unit 81a determines that synchronization has deviated, and then this is notified to the PDCP_CNT unit 81c.

The PDCP_Ciph unit 81b performs the encryption processing of the user data in which the header is compressed by the PDCP_ROHC unit 81a, and then outputs the encryption user data to the PDCP_CNT unit 81c. The PDCP_Ciph unit 81b performs the encryption/decryption processing of the user data from the UE92 that is output from the PDCP_CNT unit 81c, and then outputs the user data to the PDCP_ROHC unit 81a.

Based on a request from the PDCP_CNTunit 81c, the PDCP_Ciph unit 81b notifies the PDCP_CNT unit 81c of the HFN used for encryption.
The PDCP_CNT unit 81c controls the entire PDCP layer to perform state management of the PDCP and the header processing of the PDCP. For example, the PDCP_CNT unit 81c performs PDCP header processing of the user data that is output from the PDCP_Ciph unit 81b, and then outputs the user data to the RLC/MAC/PHY unit 82. The PDCP_CNT unit 81c performs the PDCP header processing of the user data of the UE 92 that is output from the RLC/MAC/PHY unit 82, and then outputs the user data to the PDCP_Ciph unit 81b.

When receiving a notification of encryption synchronization deviation from the PDCP_ROHC unit 81a, the PDCP_CNT unit 81c starts processing for taking the encryption synchronization and generates the control PDU to transmit the HFN notified from the PDCP_Ciph unit 81b to the UE 92.

The RLC/MAC/PHY unit 82 performs the scheduling and the automatic repeat request of the user data to perform wireless communication with the UE 92.
The call control unit 83 performs call processing. The PDCP_CNT unit 81c performs the state management of the PDCP based on the call processing of the call control unit 83.

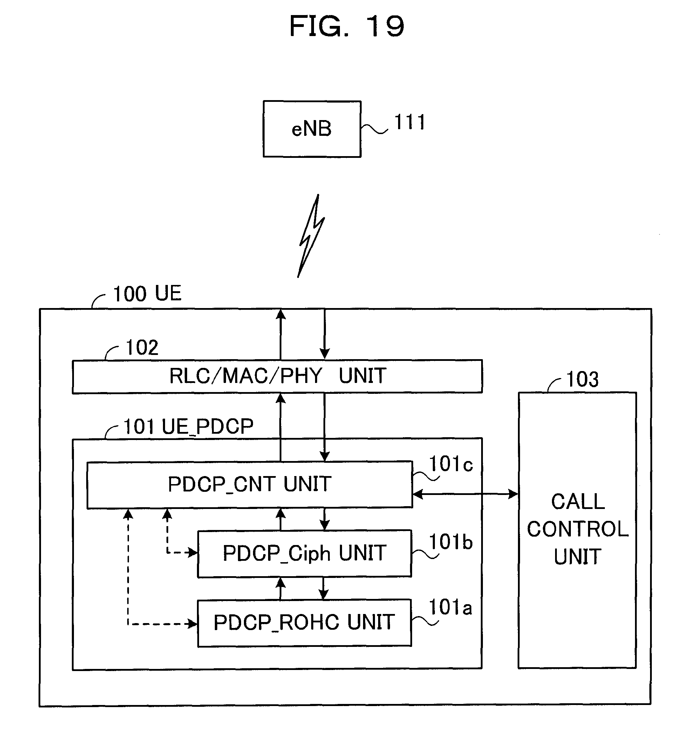

FIG.19 is a function block diagram of the UE.As shown in FIG.19, a UE 100 includes a UE_PDCP unit 101, a RLC/MAC/PHY unit 102, and a call control unit 103. The UE_PDCP unit 101 is a function that is achieved by the PDCP layer. The RLC/MAC/PHY unit 102 is a function that is achieved by the RLC/MAC/PHY layer. FIG.19 also shows an eNB 111. A solid line arrow in FIG.19 shows a flow of the U-plane signal, and a dotted line shows a flow of the control signal in the device.

The UE_PDCP unit 101 includes a PDCP_ROHC unit 101a, a PDCP_Ciph unit 101b, and a PDCP_CNT unit 101c. The function of the PDCP_ROHC unit 101a substantially correspends to the function of the ROHC of the UE described in FIG.15. The function of the PDCP_Ciph unit 101b substantially corresponds to the function of the Ciphering. The function of the PDCP_CNT unit 101c substantially corresponds to the function of the CNT.

The PDCP_ROHC unit 101a performs the header compression of the user data that is to be transmitted to the eNB 111, and then outputs the header-compressed user data to the PDCP_Ciph unit 101b. The PDCP_ROHC unit 101a performs the header expansion of the user data from the eNB 111 in which the encryption is released by the PDCP_Ciph unit 101b, and then outputs the user data to the upper layer that is not shown in FIG.19.

The PDCP_ROHC unit 101a detects the synchronization deviation of the encryption processing. The PDCP_ROHC unit 101a performs, for example, the header check of the user data, by the CRC, in which the header is expanded. When the PDCP_ROHC unit 101a detects the CRC error of the header repeatedly the predetermined number of times, it is determined that the encryption synchronization has deviated, and then this is notified to the PDCP_CNT unit 101c.

The PDCP_Ciph unit 101b performs the encryption processing of the user data, by the PDCP_ROHC unit 101a, in which the header is compressed, and then outputs the encryption user data to the PDCP_CNT unit 101c. The PDCP_Ciph unit 101b performs the decryption processing of the user data from the eNB 111 that is output from the PDCP_CNT unit 101c, and then outputs the user data to the PDCP_ROHC unit 101a.

Based on a request from the PDCP_CNT unit 101c, the PDCP_Ciph unit 101b notifies the PDCP_CNT unit 101c of the HFN used for the encryption processing.
The PDCP_CNT unit 101c controls the entire PDCP layer to perform state management of the PDCP and the header processing of the PDCP. For example, the PDCP_CNT unit 101c performs the PDCP header processing of the user data that is output from the PDCP_Ciph unit 101b, and then outputs the user data to the RLC/MAC/PHY unit 102. The PDCP_CNT unit 101c performs the PDCP header processing of the user data from the eNB 111 that is output from the RLC/MAC/PHY unit 102, and then outputs the user data to the PDCP_Ciph unit 101b.

When receiving the notification of deviation of the encryption synchronization from the PDCP_ROHC unit 101a, the PDCP_CNT unit 101c starts processing for performing the encryption synchronization and generates the control PDU to transmit the HFN notified from the PDCP_Ciph unit 81b to the UE 92.

The RLC/MAC/PHY unit 102 performs the scheduling and the automatic repeat request of the user data to perform wireless communication with the eNB 111.
The call control unit 103 performs call processing. The PDCP_CNT unit 101c performs the state management of the PDCP based on the call processing of the call control unit 103.

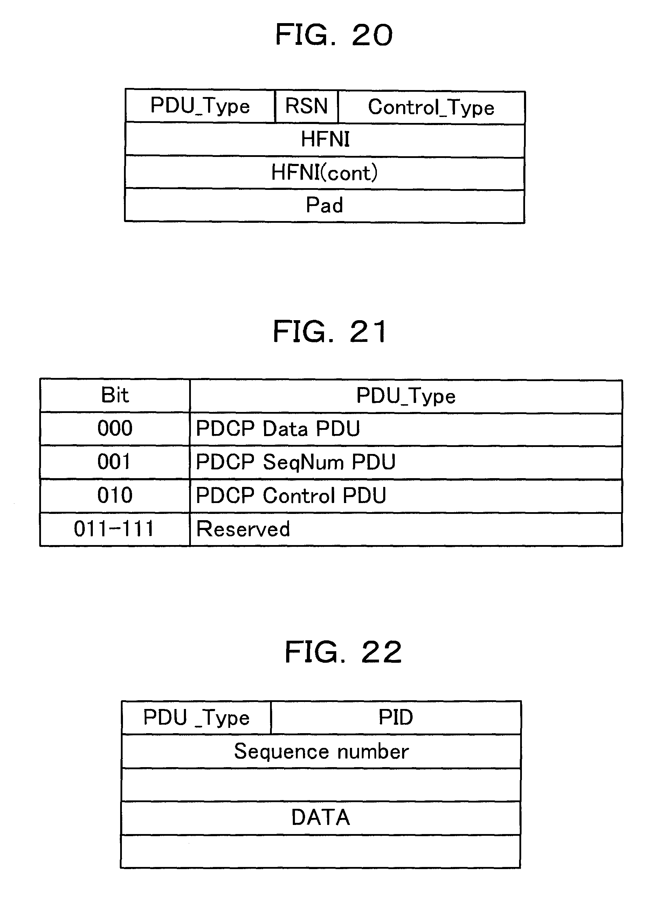

FIG. 20 is a diagram illustrating an example of a PDU format of the PDCP. As shown in FIG.20, the PDU format of the PDCP includes a PDU_Type, an RSN, a Control_Type, an HFNI, and a Pad.

The PDU_Type determines a PDU form of the PDCP. For example, depending on the value stored in the PDU_Type, the PDU of the PDCP becomes data PDU, a sequence number PDU, or a control PDU described in step S8 and step S14 in FIG.15. The PDU shown in FIG.20 shows an example of a format of the control PDU.

The RSN stores a value that is toggled in each reset procedure. The RSN will be described in a second embodiment.
The Control_Type determines a control type of the control PDU in FIG.20. For example, depending on the value stored in the Control_Type, the control type indicates whether the control type is a reset PDU communicated in step S8 in FIG.15 or a reset acknowledge PDU communicated in step S14.

The HFNI stores a value of the HFN. The COUNT-C is 32 bits and the PDCP_SN is 16 bits, so that the HFNI is 16 bits. The Pad stores padding data.

FIG.21 is a diagram illustrating a PDU_Type. The PDU_Type is expressed by 3-bit data. When the PDU_Type is 000, the PDU of the PDCP becomes the PDU of the PDCP data. When the PDU_Type is 001, the PDU of the PDCP becomes the PDU of the PDCP sequence number. When the PDU_Type is 010, the PDU of the PDCP becomes the PDU of the PDCP control.

FIG.20 shows the format of the case when the PDU_Type is 010 (the PDU of the PDCP control). The PDU_Type 010 is what is newly added. That is, the PDU in FIG. 20 is the PDU that is newly added to take the encryption synchronization in the PDCP layer.

FIG.22 is a diagram showing an example of the PDU format of the PDCP sequence number. The format in FIG.22 shows the PDU format of the case when the PDU_Type is 001 (the PDU of the PDCP sequence number).

The PID stores information indicating a compression state of the data. The sequence number stores a sequence number of the PDCP.

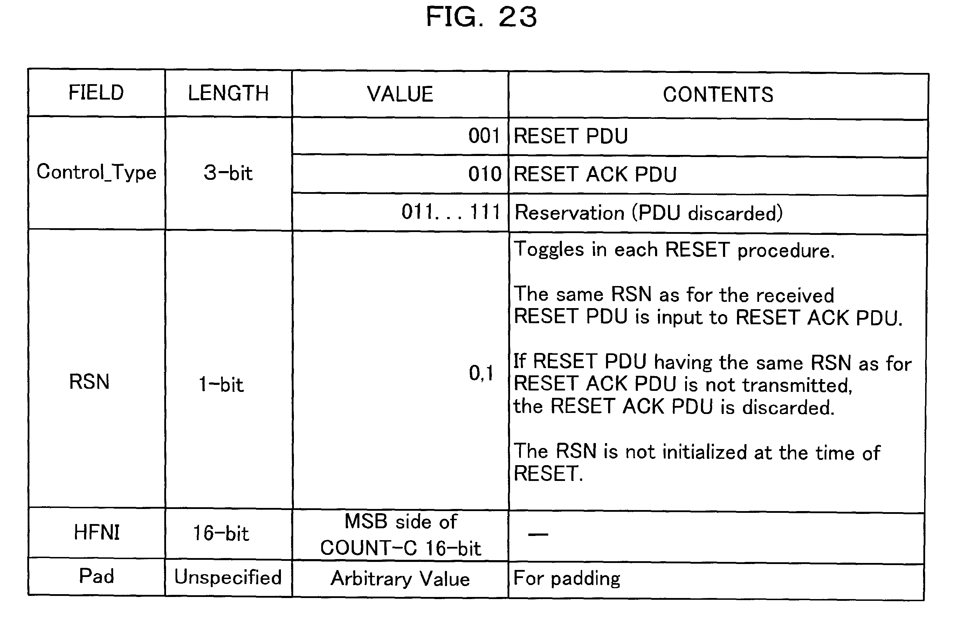

FIG.23 is a detailed diagram illustrating the PDU format in FIG.20. The Control_Type in FIG.20 stores a 3-bit value as shown in FIG.23. The number 001 indicates that the control type of the control PDU in FIG.20 is the reset PDU. The number 010 indicates that the control type of the control PDU in FIG.20 is the reset acknowledge PDU.

The Control_Type of the control PDU communicated in step S8 in FIG.15 is 001. The Control_Type of the control PDU communicated in step S14 is 010.

The RSN in FIG.20 stores a 1-bit value as shown in FIG.23. The value of the RSN varies alternating between 0 and 1 in each reset procedure. The RSN will be described in the second embodiment.

The HFNI stores a 16-bit value of a Most Significant Bit (MSB) side of the COUNT-C. The Pad stores the padding data.
In this manner, the eNB and the UE detect synchronization deviation of the encryption processing. Then the eNB and the UE notify the opposite side of the encryption synchronization information by the PDCP layer. This enables the eNB and the UE to perform re-synchronization of the encryption processing.

Next, a preferred second embodiment will be described in detail with reference to the figures. In the first embodiment, the device detecting deviation of the encryption synchronization notifies the device at the opposite side of the information for encryption synchronization only one time. In the second embodiment, the device notifies the device at the opposite side of the information for encryption synchronization repeatedly until an acknowledge is returned from the device at the opposite side.

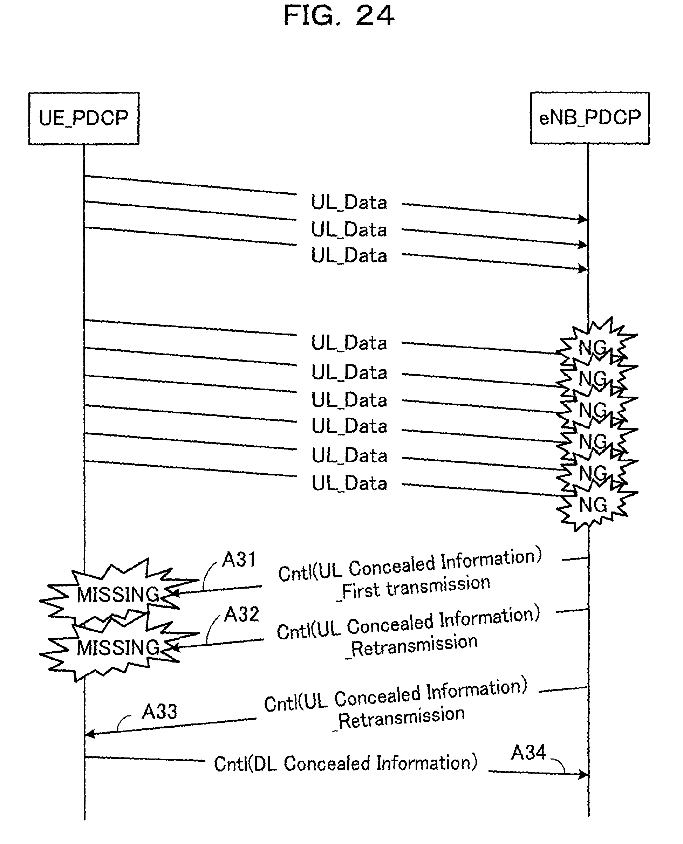

FIG.24 is a sequence diagram illustrating the encryption synchronization processing according to the second embodiment. FIG.24 shows interaction of the PDCP layer of the UE (UE_PDCP) and the PDCP layer of the eNB (eNB_PDCP).

As described above, the UE_PDCP and the eNB_PDCP have a encryption parameter for the downlink and a encryption parameter for the uplink, respectively. To perform downlink communication, the UE_PDCP and the eNB_PDCP perform encryption processing of the data by the encryption parameter for the downlink to perform wireless communication. To perform uplink communication, the UE_PDCP and the eNB_PDCP perform encryption processing of the data by the encryption parameter for the uplink to perform wireless communication. FIG.24 shows the processing in the uplink (the UE is the transmitting side, and the eNB is the receiving side).

The eNB_PDCP of the receiving side performs the header expansion processing of the uplink data received from the UE, and then performs the header check of the expanded header. For example, the eNB_PDCP of the receiving side performs the CRC check of the expanded header.

When the eNB_PDCP of the receiving side determines, by the header check, that the header is incorrect repeatedly the predetermined number of times, it is determined that the encryption synchronization has deviated. For example, as shown in FIG. 24, when the eNB_PDCP of the receiving side fails to expand the header repeatedly six times, it is determined that the synchronization has deviated.

The eNB_PDCP of the receiving side transmits the reset information to reset the processing of the UE_PDCP of the transmitting side. At this time, the encryption parameter for the uplink (HFN) is transmitted. For example, as shown by an arrow A31 in FIG. 24, the Reset and the UL encryption information are transmitted to the UE_PDCP in the control frame of the PDCP.

It is assumed that the control frame transmitted from the eNB_PDCP of the receiving side is missing because of deterioration of the wireless link and the like as shown by the arrow A31. In this case, since the UE of the transmitting side receives no control frame from the eNB_PDCP, the UE returns no acknowledge indicating a reception response of the control frame to the eNB_PDCP. The eNB_PDCP of the receiving side retransmits the control frame, as shown by an arrow A32 in FIG.24, until the acknowledge is returned from the UE of the transmitting side. The retransmission of the control frame is performed, for example, in a predetermined interval by a timer and the like.

As shown by an arrow A33 in FIG.24, the UE_PDCP is assumed to receive the control frame. When receiving the reset information and the encryption parameter from the eNB_PDCP of the receiving side, the UE_PDCP of the transmitting side resets the processing of the UE_PDCP and sets the received encryption parameter. This enables the encryption processing for the uplink to be synchronized.

When receiving the reset information and the encryption parameter for the uplink, the UE_PDCP of the transmitting side transmits the reception of the reset information and the encryption parameter for the downlink to the eNB_PDCP of the receiving side. For example, as shown by an arrow A34 in FIG.24, the UE_PDCP of the transmitting side transmits the control frame including the Reset_ACK and the DL encryption information to the eNB_PDCP. This enables the encryption processing for the downlink to be synchronized. By receiving the acknowledgement from the UE_PDCP, the eNB_PDCP of the receiving side finishes the retransmission processing.

The uplink is described above as an example. However, the downlink has the same description as that of the uplink. In this case, the eNB is the transmitting side, and the UE is the receiving side.
In this manner, the eNB_PDCP of the receiving side performs the reset request repeatedly until the acknowledge in response to the reset request is returned from the UE_PDCP of the transmitting side.

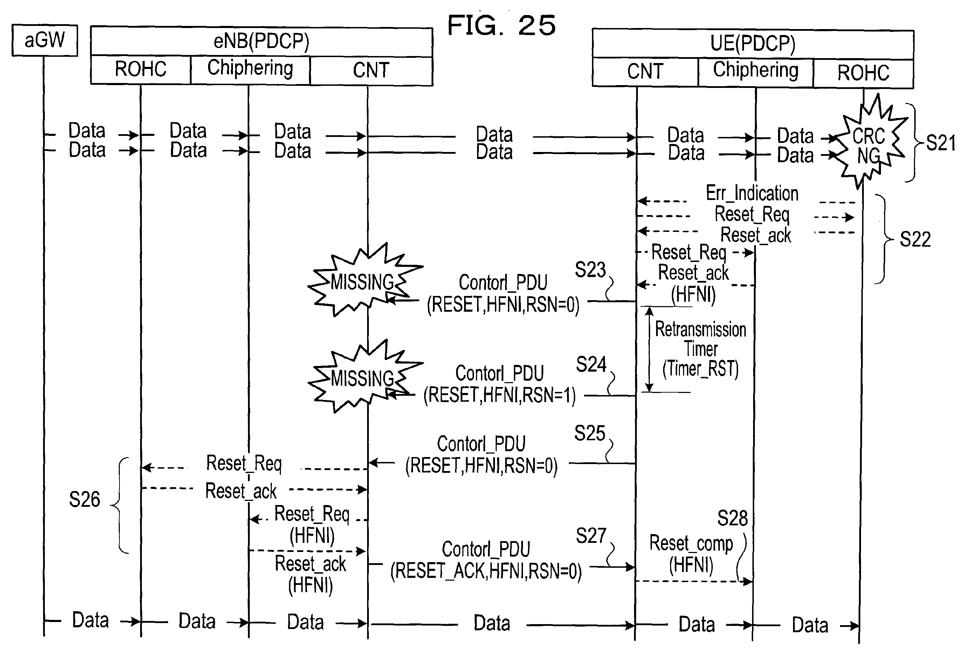

FIG.25 is a detailed sequence diagram illustrating encryption synchronization processing. The eNB, the UE, the ROHC, the Ciphering, and the CNT shown in FIG.25 are substantially the same as those in FIG. 15. Thus, the descriptions are omitted. A difference between the sequence in FIG.25 and the sequence in FIG. 15 is that the CNT of the UE retransmits the control PDU. In FIG.25, it is assumed that the synchronization of the DL_HFN for the downlink and the UL_HFN for the uplink of the eNB and the UE has deviated.

As shown in step S21, the eNB, the ROHC, the Ciphering, and the CNT of the eNB performs the header compression, the encryption processing, and the header processing of the PDCP of the data received from the aGW, and then transmits the data to the UE.

The CNT, the Ciphering, and the ROHC of the UE performs the header processing, the encryption/decryption processing, and the header expansion processing of the data received from the eNB.
As described above, the eNB and the UE have different DL_HFN. Therefore, in the Ciphering of the UE, the encryption of the data is released by mistake, and then the header information includes an error. Then, the header check after the header expansion processing in the ROCH of the UE detects a header abnormality (CRCNG).

The processing shown in step S22 is substantially the same as in step S3 to step S7 in FIG.15. Thus, the descriptions are omitted.
As shown in step S23, the CNT of the UE transmits, to the eNB that is an opposed device, the control PDU including the reset information in FIG.20 in which the Control_Type is 001, the HFNI, and the RSN. The control PDU of step S23 is assumed to be missing during the wireless transmission. Further, the value of the RSN of step S23 is assumed to be 0.

Since the control PDU transmitted from the UE is missing during the wireless transmission, the eNB receives no control PDU.Therefore, the eNB returns no control PDU in which the Control_Type in FIG.20 indicating a response of the control PDU is 010 to the UE. Then, as shown in step S24, the CNT of the UE retransmits the control PDU of step S23 to the eNB, the opposed device. In this case, the value of the RSN is assumed to be 1. The control PDU of step S24 is again assumed to be missing during the wireless transmission.

Since the control PDU of step S24 transmitted from the UE is missing during the wireless transmission, the eNB receives no control PDU. Therefore, the eNB returns no control PDU indicating the response of the control PDU to the UE. Thus, as shown in step S25, the CNT of the UE retransmits the control PDU of step S23 to the eNB, the opposed device. In this case, the value of the RSN is assumed to be 0. The control PDU of step S25 is assumed to succeed in the wireless transmission.

The processing shown in step S26 is substantially the same as in step S9 to step S13 in FIG.15. Thus, the description is omitted.
As shown in step S27, the CNT of the eNB transmits, to the UE that is the opposed device, the control PDU including the HFNI, the RSN, and the reset acknowledge in FIG.20 in which the Control_Type indicating the response of step S25 is 010. The value of the RSN is the value of the RSN of the control PDU transmitted from the UE. That is, the value is set to the value (0) of the RSN in step S25.

As shown in step S28, when receiving the control PDU from the eNB, the CNT of the UE transmits a Reset_comp indicating a reset completion to the Ciphering. At this time, the HFNI received from the eNB is also transmitted to the Ciphering.

In this manner, the UE detects loss of the encryption synchronization between the eNB and the UE based on the failure of the header expansion. Then, in the PDCP layer, the UE notifies the eNB of the HFN and retransmitted the HFN repeatedly until the acknowledgement is returned in response to this notification. This enables the encryption synchronization of the eNB and the UE to be achieved.

The RSN value is switched to 0 from 1 in each transmission of the control PDU. The device receiving the control PDU sets the value of the RSN included in the received control PDU, and then transmits back the control PDU to the device of the transmitting side. This enables the device of the transmitting side to confirm that the control PDU is transmitted properly. For example, in step S27 in FIG.25, when receiving the control PDU in which the value of the RSN is 1, the UE discards the received control PDU and again transmits the control PDU to the eNB.

The downlink is described above as an example. However, the operation of the uplink is substantially the same as in the downlink. For example, the eNB and the UE in FIG.25 are just replaced with each other.
The functions of the eNB and the UE are substantially the same as those in the block diagrams in FIG. 18 and FIG. 19. However, the difference is that the PDCP_CNT unit transmits the control PDU of the reset PDU in the predetermined interval repeatedly until the control PDU of the reset acknowledge PDU is received from the device of the opposite side. When the PDCP_CNT unit receives the control PDU of the reset acknowledge PDU of the RSN that is the same as the transmitted RSN and receives the control PDU of the reset acknowledge PDU of a different RSN, the PDCP_CNT unit discards the control PDU.

Next, a preferred third embodiment of the present invention will be described in detail with reference to the figures. In the second embodiment, the reset PDU is transmitted repeatedly until the reset acknowledge PDU is returned from the device of the opposite side. In the third embodiment, if no reset acknowledge PDU is returned from the device of the opposite side even though the reset PDU is transmitted repeatedly a predetermined number of times, a protocol error is determined. Then this is notified to the upper layer.

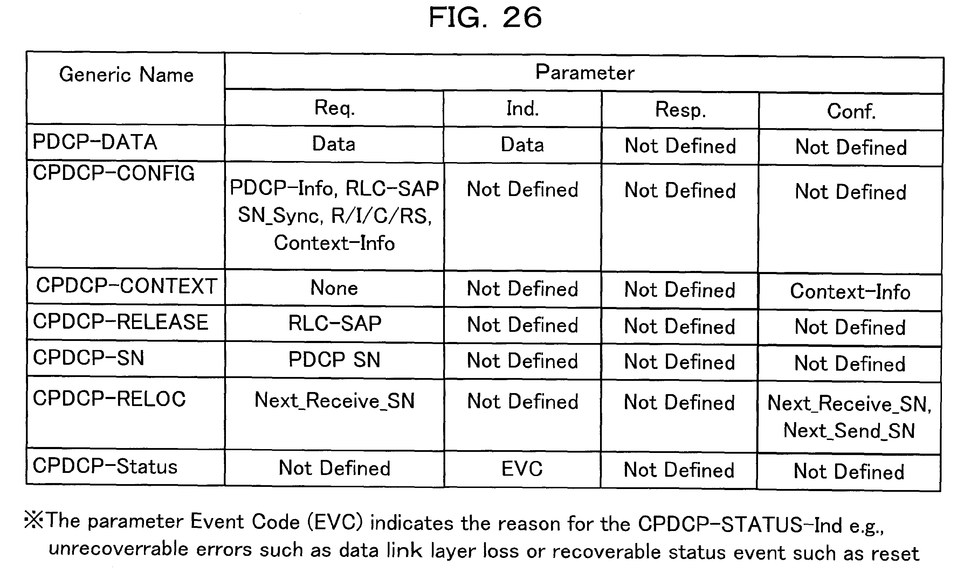

FIG.26 is a diagram illustrating an upper layer and the message transmitted and received according to the third embodiment. The PDCP layer performs communication with the upper layer by the message shown in FIG.26.

The leftmost column in FIG.26 indicates a type of message. For example, CPDCP-CONFIG indicates a message related to the setting of the PDCP. CPDCP-RELEASE indicates a message related to the release of the PDCP (the release of call control). CPDCP-RELOC indicates a message related to the resetting of the PDCP. CPDCP-Status indicates a message related to the state of the PDCP. Further, CPDCP-Status is a message that is newly added.

The second line from the top row of FIG.26 shows a feature of the parameter of the message in the leftmost column. For example, Req indicates a parameter that is transmitted to the PDCP layer from the upper layer. Ind indicates a parameter that is transmitted to the upper layer from the PDCP layer. Resp indicates a parameter related to the response. Conf indicates a parameter related to the completion of processing.

The middle column of FIG.26 indicates a parameter of the message. For example, the message of CPDCP-CONFIG includes a parameter such as PDCP-Info. This parameter is a parameter (Req) that is transmitted to the PDCP layer from the upper layer. The message of CPDCP-Status includes an EVC parameter. The EVC parameter is a parameter indicating a reason of an unrecoverable error and is a parameter (Ind) that is transmitted to the upper layer from the PDCP layer.

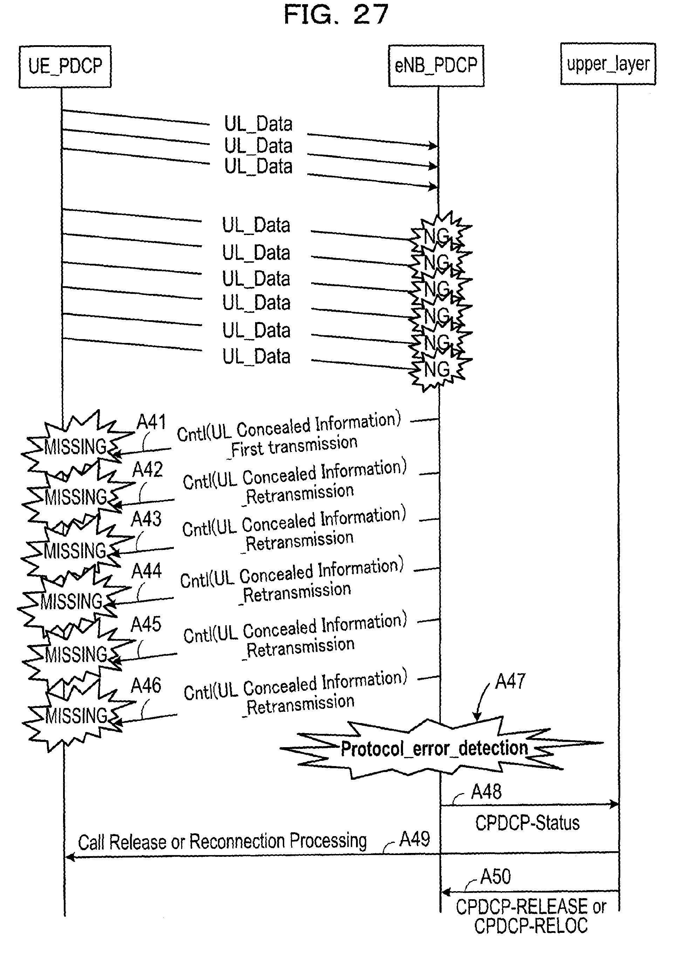

FIG.27 is a sequence diagram illustrating encryption synchronization processing. FIG.27 shows interaction between the PDVP layer of the UE (UE_PDCP) and the PDCP layer of the eNB (eNB_PDCP).

The UE_PDCP and the eNB_PDCP have a encryption parameter for the downlink and a encryption parameter for the uplink as described above, respectively. To perform downlink communication, the UE_PDCP and the eNB_PDCP perform encryption processing of the data by the encryption parameter for the downlink to perform wireless communication. To perform uplink communication, the UE_PDCP and the eNB_PDCP perform encryption processing of the data by the encryption parameter for the uplink to perform wireless communication. FIG.27 shows processing in the uplink (the UE is the transmitting side, and the eNB is the receiving side).

The eNB_PDCP of the receiving side expands the header of the uplink data received from the UE, and then checks the expanded header, for example by a CRC check.

When the eNB_PDCP of the receiving side determines, by the header check, that the header is incorrect repeatedly for a predetermined number of times, it is determined that the encryption synchronization has deviated. For example, as shown in FIG.27, when the header expansion has failed repeatedly six times, the eNB_PDCP of the receiving side determines that the synchronization is lost.

The eNB_PDCP of the receiving side transmits the reset information to reset the processing of the UE_PDCP of the transmitting side. At this time, the encryption parameter (HFN) for the uplink is transmitted. For example, as shown by an arrow A41 in FIG.27, the Reset and the UL encryption information are transmitted in the control frame to the UE_PDCP.

As shown by the arrow A41, the control frame transmitted from the eNB_PDCP of the receiving side is assumed to be missing because of a deterioration of the wireless link and the like. In this case, since the UE of the transmitting side receives no control frame from the eNB_PDCP, the UE returns no acknowledgement indicating the reception response of the control frame to the eNB_PDCP. The eNB_PDCP of the receiving side retransmits the control frame, as shown by arrows A42 to A46 in FIG.17, until the acknowledgement is returned from the UE of the transmitting side. The retransmission of the control frame is performed, for example, in a predetermined interval by a timer and the like.

When the eNB_PDCP receives no control frame of the acknowledgement from the UE_PDCP even though the control frame is transmitted to the UE_PDCP the predetermined number of times, as shown by an arrow A47, the eNB_PDCP detects a protocol error that is an unrecoverable communication error. In the example in FIG.27, the eNB_PDCP detects the protocol error when the eNB_PDCP receives no control frame of the acknowledge even though the control frame is transmitted to the UE_PDCP six times.

When the protocol error is detected, as shown by an arrow A48, the eNB_PDCP notifies the upper layer (upper_layer) of the protocol error. The eNB_PDCP notifies the upper layer of the protocol error by the EVC parameter of the CPDCP-Status message described in FIG.26.

When receiving the CPDCP-Status message from the eNB_PDCP, the upper layer requests the UE_PDCP to perform call release or reconnection processing as shown by an arrow A49. Further, as shown by an arrow A50, the upper layer notifies the eNB_PDCP of CPDCP-RELEASE, a message for releasing the PDCP, or CPDCP-RELOC, a message for performing the resetting of the PDCP. In response to the message from the upper layer, the eNB_PDCP performs the releasing or the resetting of the PDCP.

The uplink is described above as an example. However, description of the downlink is substantially the same as in the uplink. In this case, the eNB is the transmitting side, and the UE is the receiving side.
In this manner, the eNB_PDCP of the receiving side performs the reset request repeatedly until the acknowledge in response to the reset request is returned from the UE_PDCP of the transmitting side. Then, if no acknowledge is returned even though the reset request is performed repeatedly the predetermined number of times, this is notified to the upper layer.

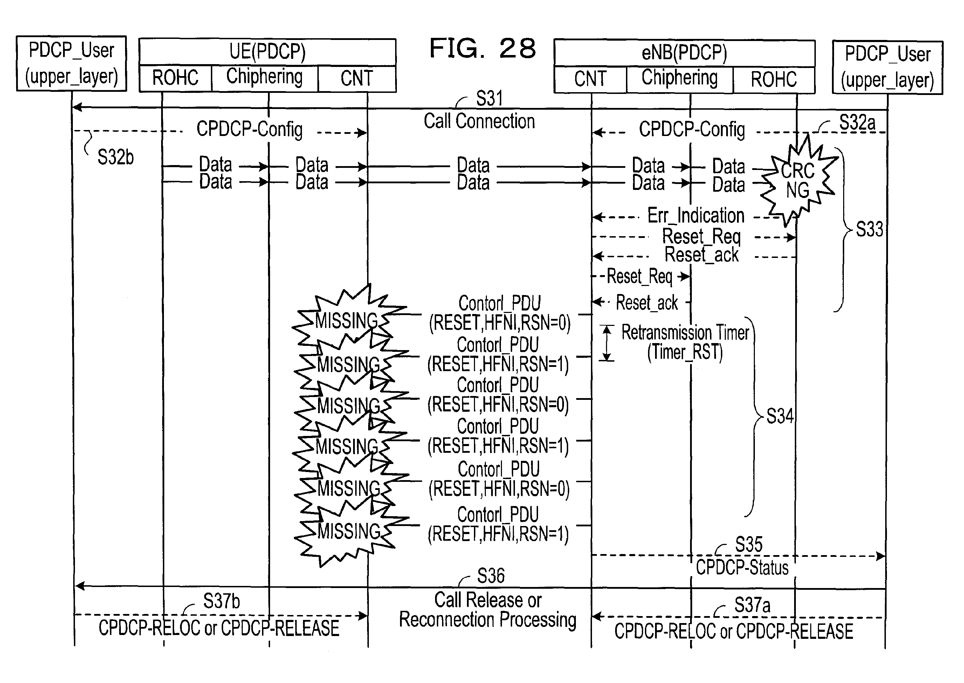

FIG.28 is a detailed sequence diagram illustrating encryption synchronization processing. The eNB (PDCP), the UE (PDCP), the ROHC, the Ciphering, and the CNT shown in FIG.28 are substantially the same as in FIG.25. Thus, the descriptions are omitted. However, the difference is that, if the CNT of the eNB receives no acknowledgement from the UE even though the control PDU is retransmitted to the UE the predetermined number of times, the CNT of the eNB notifies the upper layer of occurrence of the protocol error.

As shown in step S31, the upper layer of the eNB performs call connection with respect to the upper layer of the UE.
As shown in step S32a and step S32b, the upper layer of the eNB transmits a CPDCP-Config message to the CNT of the eNB and sets the PDCP layer to perform the call connection. The upper layer of the UE transmits the CPDCP-Config message to the CNT of the UE and sets the PDCP layer to perform the call connection.

In FIG.28, it is assumed that the synchronization of the DL_HFN for the downlink and the UL_HFN for the uplink of the eNB and the UE has failed.
The processing shown in step S33 is substantially the same as in step S21 and step S22 in FIG.25. Thus, the description is omitted.

The processing shown in step S34 is substantially the same as in step S23 and step S24 in FIG.25. Thus, the description is omitted.
As shown in step S35, the CNT of the eNB determines that the protocol error occurs when no reset acknowledge PDU is received from the UE even though the reset PDU is transmitted repeatedly the predetermined number of times in the predetermined interval. As shown in FIG.28, the CNT of the eNB, for example, determines that the protocol error occurs when no reset acknowledge PDU is received even though the reset PDU is transmitted to the UE repeatedly six times. The CNT of the eNB notifies the upper layer of occurrence of the protocol error by the CPDCP-Status message.

As shown in step S36, in response to the protocol error from the CNT of the eNB, the upper layer of the eNB performs the call release or the reconnection processing with respect to the upper layer of the UE.
As shown in step S37a and step S37b, the upper layer of the eNB transmits the CPDCP-RELOC message or the CPDCP-RELEASE message to the CNT of the eNB, and then performs the resetting or releasing of the PDCP. The upper layer of the UE transmits the CPDCP-RELOC message or the CPDCP-RELEASE message to the CNT of the UE, and then performs the resetting or releasing of the PDCP.

In this manner, the eNB detects the synchronization loss and transmits the reset PDU to the opposite side in the PDCP layer. The eNB notifies the upper layer of the protocol error when the eNB receives no reset acknowledgement from the UE even though the reset PDU is transmitted repeatedly the predetermined number of times. This makes it possible to release or reset the PDCP layer from the upper layer and to try another communication.

The uplink is described above as an example. However, operation of the downlink is substantially the same as in the uplink. For example, the eNB and the UE in FIG. 28 are just replaced with each other.
The functions of the eNB and the UE are substantially the same as those of the block diagrams in FIG. 18 and FIG. 19. However, the difference is that the PDCP_CNT unit transmits the control PDU of the reset PDU repeatedly in the predetermined interval until the control PDU of the reset acknowledge PDU is received from the device of the opposite side. When the control PDU of the reset acknowledge PDU of the RSN, different from the transmitted RSN, is received, the PDU is discarded. When no reset acknowledge PDU is received even though the reset PDU is transmitted repeatedly the predetermined number of times to the opposite device, such message is transmitted to the upper layer.

In the disclosed preferred first embodiment, the preferred second embodiment or the preferred third embodiment, it is possible to achieve resynchronization even though the encryption/decryption processes have deviated between the mobile station and the wireless base station.
All examples and conditional language recited herein for pedagogical purposes to aid the reader in understanding the principles of the invention and the concepts contributed by the inventor to furthering the art, and are to be construed as being without limitation to such specifically recited examples and conditions, nor does the organization of such example in the specification relate to a showing of the superiority and inferiority of the invention. Although the embodiments of the present inventions have been described in detail, it should be understood that the various changes, substitutions, and alterations could be made hereto without departing from the scope of the invention.

## Claims

1. A mobile communication system that performs concealment processing of data between a wireless base station and a mobile station, the mobile communication system comprising:
a concealment synchronization deviation detecting unit that detects concealment synchronization deviation between the mobile station and the wireless base station by detecting expansion failure of a compressed header after concealment release; and
a concealment synchronization information notifying unit that notifies an opposite side of concealment synchronization information when the concealment synchronization deviation occurs.

2. The mobile communication system according to claim 1 comprising a response receiving unit that receives response information in response to a notification of the concealment synchronization information from the opposite side.

3. The mobile communication system according to claim 2, wherein the response information includes the concealment synchronization information of the opposite side.

4. The mobile communication system according to claim 2 or 3, wherein the concealment synchronization information notifying unit retransmits the concealment synchronization information to the opposite side until the response information is received.

5. The mobile communication system according to claim 4, wherein the mobile communication system comprises an error notifying unit that notifies that a communication error occurs to an upper layer of the Packet Data Convergence Protocol (PDCP) layer if the response receiving unit receives no response from the opposite side even though the concealment synchronization information notifying unit retransmits the concealment synchronization information repeatedly a predetermined number of times.

6. The mobile communication system according to any preceding claim , wherein the concealment synchronization deviation detecting unit detects the concealment synchronization deviation when the expansion failure is detected repeatedly a predetermined number of times.

7. The mobile communication system according to any preceding claim, wherein the concealment synchronization information includes a parameter for generating an encryption key to perform concealment processing of the data.

8. A mobile communication method for performing concealment processing of data between a wireless base station and a mobile station, the mobile communication method comprising:
detecting deviation of concealment synchronization between the mobile station and the wireless base station by detecting expansion failure of a compressed header after concealment release, and
notifying concealment synchronization information to an opposite side by a Packet Data Convergence Protocol (PDCP) layer when the deviation of the concealment synchronization occurs.

9. A wireless base station that performs wireless communication with a mobile station by performing concealment processing of data, the wireless base station comprising:
a concealment synchronization deviation detecting unit that detects deviation of concealment synchronization between the mobile station and the wireless base station by detecting expansion failure of a compressed header after concealment release, and
a concealment synchronization information notifying unit that notifies the mobile station of concealment synchronization information when the deviation of the concealment synchronization occurs.

10. A mobile station that performs wireless communication with a wireless base station by performing concealment processing of data, the mobile station comprising:
a concealment synchronization deviation detecting unit that detects deviation of concealment synchronization between the wireless base station and the mobile station by detecting expansion failure of a compressed header after concealment release, and
a concealment synchronization deviation notifying unit that notifies the wireless base station in a Packet Data Convergence Protocol (PDCP) layer of concealment synchronization information when the deviation of the concealment synchronization occurs.

11. Software which, when executed by a processor of a base station unit in a wireless communication system, provides the base station according to claim 9.

12. Software which, when executed by a processor of a terminal device in a wireless communication system, provides the mobile station according to claim 10.

13. A computer-readable medium on which is recorded the software of claim 11 or 12.
